# EUROPEAN PATENT APPLICATION

(11) **EP 4 664 322 A1**
(43) Date of publication of application: **17.12.2025**
(21) Application number: 25182381.1
(22) Date of filing: 12.06.2025
(51) Int. Cl.: G06F 16/901

(54) **MULTI FACETED, BINARY DATA PROTOCOL FOR HIGH-VOLUME, HIGH-PERFORMANCE DISTRIBUTED SCHEMALESS DATA PROCESSING**

(30) Priority: 13.06.2024 US 202463659432 P; 10.06.2025 US 202519233417
(71) Applicant: Dynatrace LLC, Boston, Massachusetts 02210 (US)
(72) Inventor: SPIEGL, Helmut, Linz (AT); TRISBERG, Renee, Linz (AT); KARR-SAJTAREVIC, Halko, Linz (AT); REISINGER, Gernot, Linz (AT); BUCHGEHER, Alexander, Linz (AT)
(74) Representative: Steffens, Adrian

(57) **Abstract**

A serialization data format for the transfer, analysis, and modification of schemaless mass data is proposed. The data format supports stream oriented, pipeline-based processing, and it enables read access of contained data without deserialization, and modification access that only requires the deserialization of portions of structure and meta data. Incoming, semi-structured data records may be transformed into records of the proposed serialization data format, compressed and stored in processing buffers containing multiple of those records. During processing, only individual records are decompressed, and processed records are then compressed and stored in output processing buffers for efficient memory usage. Manipulations of data records are performed by appending new values to data records, invalidating old ones and updating access data structures to refer to new values instead of old ones, to enable various modification activities by only requiring append or not-size-changing operations of serialized data records.

## Description

### Field

The present disclosure relates to the technical field of data processing and transmission. In particular, the disclosure relates to a unified, binary data format that is suitable for transfer, read-only and modifying processing of data records. Although the data format is applicable to various types and amounts of data and forms of processing, it is best suited for the distributed, stream-oriented processing of large amounts of schemaless data records.

### Background

Application performance and functionality monitoring and management systems rely on constantly provided monitoring data ingested from monitored processing infrastructure like host computing systems, processes, and services. While early monitoring solutions relied solely on agents or other monitoring date generation functionality that is injected into monitored environments, and that create limited, controllable amounts of generated structured monitoring data records that are tailored to the requirements of the monitoring systems, this approach is no longer feasible in modern application scenarios.

First, modern application provisioning and operating environments, like cloud computing, operating orchestration systems, or even serverless application operation systems make it difficult or even impossible for application monitoring systems to place sensors or agents inside or near to monitored entities, to create and provide high-quality but relatively low-volume monitoring data, like transaction traces, that can be ingested and processed by a monitoring system with relatively low effort.

To overcome this issue, monitoring systems had to widen their monitoring data ingestion capabilities to also ingest lower-quality, semi-formatted, or schemaless monitoring data, like events, log data and the like, or other evidence data that is created by monitored components out-of-the-box, without significant interference by the monitoring system.

The increased variety of ingested evidence data variants, and the lack of knowledge about structure and semantic of to be ingested monitoring evidence data causes new requirements that monitoring systems need to cope with. First, schemaless or semi-structured data needs to be analyzed, preferably at, or near to ingestion time, to identify the structure of the ingested data. Second, this data needs to be analyzed to identify the semantic of the ingested data, which may also include changing or updating identifiers, keys or names contained in the ingested data to align them with identifiers, keys or names that are used by the monitoring system and that are linked to a certain semantic. In addition, pre-processing steps may be performed on ingested schemaless data to extract implicitly available evidence data and make it available in an explicit way, like e.g., the extraction of numeric metric values for evidence data that was ingested in textual form.

The preferred system architecture to perform those tasks is a processing pipeline, which receives the ingested evidence data via a stream like interface, where a theoretically infinite stream of consecutive evidence data records is received by the pipeline and where a sequence of operations is executed on each data record.

In addition to extending the variety of record types that monitoring systems ingest and process, also the number of ingested records drastically increased. This leads to distributed, scalable architectures of those pipeline systems, where the processing tasks are distributed to various, loosely coupled processing nodes. Evidence data records may be transmitted between processing or storage nodes via interconnecting computer networks.

Various solutions exist in the art, which support the automated sender side serialization, network transfer and receiver side deserialization of data records. The Protocol Buffers, or Proto-buf framework, initially developed by Google provides serialization/deserialization functionality for various programming languages. Pipeline systems using such automated serialization frameworks for the network transfer of evidence records work in principal, and development of such systems causes relatively low development effort, because complex network communication logic is encapsulated by the used serialization frameworks. However, such pipeline systems quickly show performance and processing time issues if the number of processed record increases.

Reason for those problems are high CPU and memory resources that are required for serialization and deserialization of data records.

Those problems are intensified in modern processing environments that provide automate heap memory management, like Java or .NET. In such systems, objects are implicitly allocated in heap memory via instructions in code, but deallocation of those objects, and reclaiming of memory is automatically performed by garbage collection subsystems, which detect when objects are no longer referred and then delete them.

Serialization/deserialization frameworks typically create short lived objects of specific type during receipt and deserialization of received data and during serialization and send of to be delivered data. Processing steps performed on received data records typically use processing specific objects representing those data records. All those short-living objects increase the burden of the garbage collection system, as they need to be identified as unreachable and the memory allocated by those objects needs to be reclaimed.

Various approaches are known in the art, which aim to mitigate these serialization/deserialization issues by providing data layouts that can be used for both transfer via a computing network and for access of the data during its processing.

Apache Arrow is one of those approaches, which uses a columnar data format for transferring and processing mass data. Basically, received data elements are split into key-value tuples, and all values of the same key are stored in one column, where the head of the column is specified by the key of the key value tuple and the values for the key are then stored in a sequence, where the sequence number identifies the data record to which the value belongs. Those "column oriented" approaches show very good performance for batch-oriented processing, where all or a large subset of values of a specific key are accessed. One reason for this performance improvement is that those values are stored next to each other in memory, which is very well exploited by various caching mechanisms available in modern CPUs and computing architectures.

However, such column-oriented storage schemes are not well suitable for processing pipelines, where individual data records are received and processed in a sequential, stream-oriented way, due to the effort caused by rearranging sequences of individual, independent records into sequences of columns, where each column represents values of multiple records.

Other approaches exist that apply a record-oriented approach, where serialized sequences of data records are stored in memory, and structure or meta data describing the inner format of the data records are created and used for selective read access of portions of individual portions of records. The Flatbuffers library, also initially developed by Google is a prominent example of those approaches. However this library and other similar approaches provide means to reuse one and the same binary format for network transfer and for read access of data records, they all lack support for modification. In case a data record needs to be modified, this record must first be transformed into a deserialized format to then be serialized again after desired modifications were performed.

Although not all processing steps performed by pipeline systems designed for the ingest and processing of semi-formatted and schemaless data perform modifications of received data records, the portion of processing steps that also perform modification of received data records is considerable. Therefore, it is desirable to also avoid serialization overhead for modification processing steps.

Consequently, there is need in the art for a serialized data format that is suitable for the transfer of data over a computing network, for selective read access of specific portions of the data, and that also supports modification of the data, without requiring a deserialization of to be modified data records.

This section provides background information related to the present disclosure which is not necessarily prior art.

### Summary

This section provides a general summary of the disclosure and is not a comprehensive disclosure of its full scope or all of its features.

A computer-implemented method for ingesting data records according to independent claim 1 is provided. The dependent claims refer to further embodiments.

According to an aspect of the invention, a computer-implemented method for ingesting data records comprises:
- receiving a plurality of serialized data records;
- formatting a serialized record container in a first memory space;
- for each serialized data record in the plurality of serialized data records, appending a given serialized data record to an end of the serialized record container, determining an offset value for the given serialized data record, and updating a record index with the offset value for the given serialized data record, where the record index is an array of offset values and each offset value in the array of offset values indicates a distance to beginning of a serialized data record in the serialized record container;
- appending the record index to an end of the serialized record container;
- determining a location of the record index in the serialized record container; and
- updating an index offset in the serialized record container with the location of the record index, where the index offset indicates a distance to beginning of the record index in the serialized record container,
wherein:
- the serialized record container includes a size field indicating size of the serialized record container and further comprises determining size of the serialized record container after the step of appending the record index and updating the size field with the determined size of the serialized record container,
- formatting the serialized record container includes allocating a second memory space for the record index, where the second memory space differs from the first memory space,
- the index offset and the size field are located within the serialized record container before a first serialized data record,
- the record index defines a sequence of serialized data records contained in the serialized record container which is independent from the storage sequence of the serialized data records within the serialized record container.

According to an example, a computer-implemented method for ingesting data records comprises:
- receiving a plurality of serialized data records;
- formatting a serialized record container in a first memory space;
- for each serialized data record in the plurality of serialized data records, appending a given serialized data record to an end of the serialized record container, determining an offset value for the given serialized data record, and updating a record index with the offset value for the given serialized data record, where the record index is an array of offset values and each offset value in the array of offset values indicates a distance to beginning of a serialized data record in the serialized record container;
- appending the record index to an end of the serialized record container;
- determining a location of the record index in the serialized record container; and
- updating an index offset in the serialized record container with the location of the record index, where the index offset indicates a distance to beginning of the record index in the serialized record container.

Formatting the serialized record container may include updating a validity indicator indicating whether data in the serialized record container is valid, and/or updating a type indicator field indicating the type of data stored in the serialized record container.

The serialized record container may include a size field indicating size of the serialized record container and/or may further comprise determining size of the serialized record container after the step of appending the record index and updating the size field with the determined size of the serialized record container.

Formatting the serialized record container may include allocating a second memory space for the record index, where preferably the second memory space differs from the first memory space.

Each of the serialized data records in the plurality of serialized data records may include at least one of a validity indicator indicating whether data in a particular serialized data record is valid, a type indicator field indicating the type of data stored in the particular serialized data record, a size field indicating size of the particular serialized data record, and payload area.

Each of the serialized data records in the plurality of serialized data records may include an encoding field, where the encoding field may preferably indicate how data in size field is encoded in the particular serialized data record.

The method may comprise compressing the serialized record container prior to storing the serialized record container

According to an example, a computer-implemented method for manipulating a serialized data record comprises:
- receiving a request to update a serialized data record in a serialized record container, where the request includes a replacement data record;
- receiving the serialized record container, where the serialized record container includes at least one serialized data record;
- comparing size of the replacement data record to size of the serialized data record;
- overwriting serialized data record with the replacement data record in response to size of the replacement data record is less than or equal to the serialized data record; and
- manipulating the serialized record container in response to size of the replacement data record is greater than the serialized data record, wherein manipulating the serialized record container includes:
   - setting a validity indicator of the serialized data record, where the validity indicator of the serialized data record indicates whether data in the serialized data record is valid;
   - appending the replacement data record to the serialized data record; and
   - updating a record index for the serialized data record, where the record index is an array of offset values and each offset value in the array of offset values indicates a distance to beginning of a serialized data record in the serialized record container.

Comparing size of the replacement data record to size of the serialized data record may include determining size of the replacement data record from a size field in the replacement data record and determining size of the serialized data record from a size field in the serialized data record.

Determining size of the serialized data record may further include reading an encoding field in the serialized data record and determining size of the serialized data record in part based on the encoding field, where preferably the encoding field indicates how data in size field is encoded in the serialized data record.

The method may comprise receiving an insertion request to insert a given data record into the serialized record container, wherein the insertion request includes the given data record and an insert position for the given data record; and/or appending the given data record to the serialized record container at the insert position and updating the record index by inserting to the record index an offset value for the given data record at the insertion position of the given data record.

The method may comprise receiving a deletion request to delete a given data record in the serialized record container, where the deletion request includes an offset for the given data record; and/or removing the offset for the given data record from the record index.

The method may comprise appending the updated record index to an end of the serialized record container; and/or updating an index offset to reference location of the updated record index in the serialized record container, where the index offset indicates a distance to beginning of the updated record index in the serialized record container.

The method may further comprise identifying one or more serialized data records in the serialized record container, where each of the one or more serialized data records contains invalid data; and/or overwriting data in the one or more serialized data records with uniform values.

The method may comprise identifying one or more serialized data records in the serialized record container, where each of the one or more serialized data records contains invalid data; and/or creating a new serialized record container containing serialized data records having valid data.

The method may comprise compressing the serialized record container prior to storing the serialized record container.

The serialized record container may include at least one of a validity indicator indicating whether data in the serialized data container is valid, a type indicator field indicating the type of data stored in the serialized data container, and a size field indicating size of the serialized record container.

The at least one serialized data record may include at least one of a validity indicator indicating whether data in a particular serialized data record is valid, a type indicator field indicating the type of data stored in the particular serialized data record, a size field indicating size of the particular serialized data record, and payload area.

The at least one serialized data record may be defined as a key-value tuple and/or may include a key that uniquely identifies the at least one serialized data record in the serialized record container.

In another example, a computer-implemented method for serializing data records in a computer system, comprises:
- defining a serialized record container, wherein the serialized record container includes an index offset located before payload data and a record index appended after the payload data, such that the index offset indicates a distance to beginning of the record index in the serialized record container and the record index is an array of offset values, each offset value in the array of offset values indicates a distance to beginning of a particular serialized data record in the serialized record container;
- allocating memory space for the record index;
- receiving an input data record;
- updating the record index for the input data record;
- formatting the serialized record container with data from the input data record; and
- storing the serialized data record in a data store.

Formatting the serialized record container may include at least one of serializing the input data record to from a serialized data record, appending the serialized data record to an end of the serialized record container, updating a validity indicator indicating whether data in the serialized data container is valid, and updating a type indicator field indicating the type of data stored in the serialized data container.

The serialized data record may include at least one of a validity indicator indicating whether data in a particular serialized data record is valid, a type indicator field indicating the type of data stored in the particular serialized data record, a size field indicating size of the particular serialized data record, and payload area.

The serialized data record may further include an encoding field, where the encoding field preferably indicates how data in size field is encoded in the particular serialized data record.

The serialized data record may be defined as a key-value tuple and/or may include a key that uniquely identifies the serialized data record in the serialized record container.

The method may comprises compressing the serialized data record prior to storing the serialized data record.

In another example. a computer-implemented method for ingesting data records comprises:
- receiving a plurality of serialized data records, wherein each of the serialized data records in the plurality of serialized data records is defined as a key-value tuple and includes a key that uniquely identifies a given serialized data record in the serialized record container;
- formatting a serialized tuple container in a first memory space;
- for each serialized data record in the plurality of serialized data records, appending a given serialized data record to an end of the serialized tuple container, calculating a hash value for the key of the given serialized data record, determining a given slot of a hash structure using the hash value, and updating the given slot of the hash structure with an offset value, where the hash structure is an array of offset values and each offset value in the array of offset values indicates a distance to beginning of a serialized data record in the serialized tuple container;
- appending the hash structure to an end of the serialized tuple container;
- determining a location of the hash structure in the serialized tuple container; and
- updating hash offset in the serialized tuple container with the location of the hash structure, where the hash offset indicates a distance to beginning of the hash structure in the serialized tuple container.

Appending the hash structure may further comprise compressing the hash structure by only storing updated slots of the hash structure at the end of the serialize tuple container.

Formatting the serialized tuple container may include at least one of updating a validity indicator indicating whether data in the serialized tuple container is valid, and updating a type indicator field indicating the type of data stored in the serialized tuple container.

The serialized tuple container may include a size field indicating size of the serialized tuple container and/or may further comprise determining size of the serialized tuple container after the step of appending the hash structure and updating the size field with the determined size of the serialized tuple container.

Formatting the serialized tuple container may include allocating a second memory space for the hash structure, where the second memory space preferably differs from the first memory space.

Each of the serialized data records in the plurality of serialized data records may include at least one of a validity indicator indicating whether data in a particular serialized data record is valid, a type indicator field indicating the type of data stored in the particular serialized data record, a size field indicating size of the particular serialized data record, and payload area.

Each of the serialized data records in the plurality of serialized data records may include an encoding field, where the encoding field preferably indicates how data in size field is encoded in the particular serialized data record.

The disclosed technologies and methods are directed to a unified serialization and processing format, for data records of various complexity that are received and processed in a sequential, stream-oriented form. The proposed format supports interleaved network transport and processing of encoded data records, without the need to deserialize or otherwise reformat serialized data records. Input data records may be received and converted into serialized data records by ingestion nodes at the perimeter of processing pipeline systems, and then forwarded to sequences of processing nodes. The serialized records may also be persisted on a file system or in a data base, as an intermediate or terminating step of the processing pipeline.

Some embodiments may distinguish between read-only and modifying processing and create and use variants of serialized data records that are optimized for the respective processing type. A serialized record supporting its modification may contain a validity indicator, which may be used to perform deletion or modification operation of the serialized record. This validity indicator may be omitted if no modifications of the record are required.

The layout of serialized data records may, for modifiable records start with validity indicator, followed by a byte size encoding section. For read-only records, it may start with the byte size encoding section. The byte size encoding section is independent of the type of the serialized record and contains data to determine how data for the byte size of the payload of the serialized record is stored. This enables processing nodes that are not aware of specific record types to gracefully ignore the unknown record type, by reading and interpreting the byte size encoding data to determine the byte size of the unknown record and to skip over to the next serialized record.

A type information section follows the byte size encoding, which specifies the type of the serialized record. Exemplary types include Strings, integer numbers (Short, Integer, Long, etc.), floating point numbers, complex types of fixed byte size (IP address, location coordinates, etc.) or complex types with variable byte size (arrays or key-value sets). An optional payload size data section may follow the type information section. In some cases, e.g., where the type information already determines the byte size of the payload, like numeric types, or complex types with fixed size, the payload size data section is omitted.

Depending on the type of the serialized record and on data access requirements, either a random access meta data offset section, or the payload section containing the actual data of the serialized record follow. The random access meta data offset may be available for complex types with variable size, like arrays or key-value sets, when random access to the elements of those complex types is required. Type info may be used to encode and determine whether a specific serialized record containing a complex type with variable length contains a random access meta data offset. For some types of records, where the number of different values for the type is limited, those values may be encoded into the type information section. In this case, also the payload section may be omitted. An example is the type Boolean, where the possible values "true" or "false" may already be encoded in the type information section. For serialized records that contain complex types with variable size that support random access of contained elements, a random-access meta data section, containing offsets for those data elements terminates the serialized record.

Variant embodiments may, for complex serialized records with variable size, use a same length indicator, which indicates if all elements contained in the serialized record have the same byte size. In this case, random access meta data may be omitted, even if random access for contained data elements is required, because offsets for individual data elements can be calculated by determining the size of the first data element and multiplying it with the index number of the to be accessed data element. Consequently, the same length indicator needs to be stored and interpreted before the random-access meta data offset.

Variant embodiments of complex types may provide mapping functionality, where contained elements form key-value tuples, and where random-access data is available in form of hash tables, where entries of such hash tables map hash values generated from keys to information for the location of the key within the complex serialized record. Those hash tables may be stored in the serialized record in a compressed form, consisting of a sequence of indicators or flags for occupied hash slots, followed by a list of offsets for those hash slots.

Other embodiments may provide means to select between serialization forms of serialized records that support modifications and forms that do not support modifications. The ability to perform modifications on serialized records requires the storage of additional management data describing those manipulations. This additional management data should only be created when it is required due to desired manipulations.

Various forms of manipulations of serialized data are provided by some embodiments, including in-place modifications, where a portion of the serialized record is replaced by data that at most requires the serialized storage size of the original data, and the storage space of the original data can be reused, and size-changing modifications, where storage size of updated date exceeds the size of original data. For size-changing manipulations, the original data may need to be invalidated, the new data be appended to the serialized record, and eventually available random-access data needs to be updated to refer to the new data portion instead of the invalided old one.

Different forms of finalization procedures, which process serialized data records after sequences of manipulations may applied, e.g., to store the modified serialized data records in an output stream. A first finalization variant may store modified serialized data records in the form they have after manipulation, thereby also storing portions of the data record that were invalidated due to manipulations in the output stream. This finalization strategy has the lowest CPU impact because the record is transferred to the output stream as it is, without any manipulations, but it has the drawback that storage space in the output stream is wasted due to the already invalidated portions of data that are written to the output stream.

A second finalization variant may identify invalidated sections of modified serialized records and overwrite those invalidated sections with specific, homogeneous values, like sequences of null values (i.e., those sections are "zeroed out"). Typically, serialized records are compressed before they are stored in an output stream, and the homogeneous values that the finalization process creates for invalidated sections show a much better compression ratio than arbitrary data. This variant causes limited CPU effort, because only some sections of a to be finalized serialized data record need to be identified and overwritten, and it mitigates the issue of wasted storage space for invalidated data sections due to the more efficient compression.

A third finalization variant may, during iterating over the elements of a to be finalized serialized record and write only still valid portions of the serialized record that are still valid to the output stream. If the serialized record contains random-access data, like a hash table, also the hash table needs to be updated, because offsets stored in the random-access data may need to be corrected after such a "rewriting" finalization. This finalization variant has the highest CPU impact, because the whole serialized record needs to be analyzed and rewritten, but it also has the best memory efficiency, because invalidated portions of the serialized data record are not stored in the output stream. In addition, subsequent processing of the serialized data record may benefit from such a "clean" rewrite, because in this case, it is not required to read and interpret data describing invalidated sections of the serialized record to interpret the stored data correctly.

Yet other variant embodiments may provide means to represent hierarchical structures of serialized data records and to also manipulate those hierarchical records. As an example, serialized records that represent containers for other serialized records, like arrays or maps, may contain elements that are in turn containers of other serialized records. This provides for arbitrary nesting depths of serialized records. For size-changing modifications of nested serialized records, data for updates may be appended to the serialized record that represents the top-level of the nesting hierarchy.

Still other embodiments may use serialized records in combination with dictionary data structures, where those dictionary data may map textual identifiers to corresponding numerical identifiers, like hash values.

Some variants of those embodiments may maintain global, semantic dictionaries, that map textual identifiers, like key values, to numeric (hash) values. During creation of serialized records that contain those keys, not the original textual value of the key may be stored in the serialized record, but the corresponding numeric value.

Other variants of those embodiments may create groups of serialized records, create a local key dictionary for each created group of record, and store the dictionary together with the group of records for which it was created. Also in this variant, the dictionary maps textual values of keys to corresponding numeric values, and the serialized records use those numeric values instead of the textual values as keys.

Both above variants reduce the storage memory footprint, as the numeric representations of textual keys typically require less memory than the textual representation of those keys. Those variants also support fast and efficient renaming of keys, as in case the change of the textual value of a key is desired, only the textual representation of the key in the semantic of local dictionary is required, instead of an update of all key values in all affected serialized records.

Further areas of applicability will become apparent from the description provided herein. The description and specific examples in this summary are intended for purposes of illustration only and are not intended to limit the scope of the present disclosure.

### Drawings

The accompanying drawings, which are incorporated in and constitute part of this specification, illustrate embodiments of the disclosure and together with the description, serve to explain the principles of the disclosure. The embodiments illustrated herein are presently preferred, it being understood, however, that the disclosure is not limited to the precise arrangements and instrumentalities shown, wherein:
- FIGs. 1a and 1b: show two variants of distributed pipeline systems for large scale ingest and processing of monitoring data records. FIG. 1a provides a pipeline variant in which ingested monitoring data is only persisted at the end of the processing chain, whereas FIG. 1b shows a variant also including intermediate persisting of monitoring data.
- FIG. 2: provides a more detailed block diagram of a portion of a distributed pipeline system containing an ingestion node, which receives input records from monitoring data sources in arbitrary formats and shapes and which converts those received input\ records into serialized records, and a processing node, which receives those serialized records and performs read-only processing activities on those serialized records.
- FIG. 3: provides two exemplary conversion rules that may be used for the transformation of received data records into serialized records.
- FIG. 4: shows a block diagram of a processing node performing in-place modifications of serialized records, where performed modifications do not increase the size of modified serialized records.
- FIG. 5: contains a block diagram of a processing node performing modifications that increase the size of modified serialized records. Those modifications include the generation of a deserialized/expanded form of random-access meta data stored in modified serialized records.
- FIG. 6: provides a flow chart describing the life cycle of buffers for the storage and transfer of multiple serialized records.
- FIG. 7: conceptually describes access management and access coordination for multiple processing nodes accessing serialized records. A variant for sets of processing nodes performing only read-only processing steps, and a variant for sets of processing nodes that also perform manipulating steps is shown.
- FIG. 8: provides the structure and layout of exemplary serialized records, including types of serialized records designed to contain other, nested serialized records.
- FIG. 9: shows different variants for size end type encodings for serialized records.
- FIG. 10: provides format and layout of random-access meta data that may be part of container serialized records and that may be used for fast and efficient access of individual serialized records stored in those container records.
- FIG. 11: visually describes modifications performed on a serialized key-value tuple container record, which stores sets of tuples, where each tuple maps a specific key to a specific value, and random-access meta data in form of a hash table.
- FIG. 12: visually describes variants of finalization processes that may be applied to modified serialized key-tuple container records, after modification processing is finished.
- FIG. 13: provides flow charts of basic operations that may be performed on serialized key-tuple container records, like the creation of such a container record during the ingest of monitoring data, the request of a value assigned to a specific key, and the preparation of such a container for its modification.
- FIG. 14: shows flow charts for exemplary modification operations that may be performed on serialized key-tuple container records.
- FIG. 15: depicts flow chars of different variants of finalization processes applied to serialized key-tuple container records after modifications are finished.
- FIG. 16: visually describes a modification sequence applied to a serialized record container, which contains sequences of serialized records.
- FIG. 17: visually describes variants of finalization processes that are applied to serialized record contains after modifications are finished.
- FIG. 18: provides flow charts for various basic operations performed on serialized record containers, like their creation on ingest, access to individual stored serialized record, or preparation for modification.
- FIG. 19: contains flow charts of exemplary modification operations that may be performed on serialized record containers.
- FIG. 20: shows flow charts of different modification finalization variants for serialized record containers.
- FIG. 21: displays an exemplary variant of a serialized record of a container type, containing another serialized record of container type as one of its contained elements.
- FIG. 22: conceptually describes processes to access elements of nested container records, and to modify such elements.
- FIGs. 23 and 24: visually, and in form of flow charts, describes the combined management of hash collisions and tuple manipulations for serialized key-value tuple container records.
- FIG. 25: conceptually describes the integration of a global key dictionary with serialized key-value tuple container records to assure that ingested keys of key-value tuples are aligned with keys stored in the global key dictionary.
- FIG. 26: provides a variant of a serialized record buffer that, in addition to ingested serialized records, contains a local dictionary, which may be used to store mappings of repetitively ingested data fragments, like keys of tuples, to numeric representations of those data fragments, where the serialized storage size of ingested keys exceeds the storage size of their numeric representation.
- FIG. 27: provides flow charts of processes for the creation of serialized record buffers containing a local dictionary.

### Detailed description

The disclosed technologies, data formats and processing methods are directed to the seamless network transfer, interpretation and modification of record-oriented mass data that is received in a stream like fashion. Processing and conversion efforts required for the transfer of such data records are eliminated or at least minimized, because interpretation and read-only processing are using the serialized format of received data records. Conversion efforts are also minimized for processing steps that perform manipulations of serialized records, only access-meta data contained in those records is deserialized and updated in this deserialized form. Portions of manipulated records that are not affected by manipulations remain in the serialized form, and for parts that are affected by those manipulations, the manipulation results are directly stored in serialized form.

Each serialized record contains, next to its payload data, also meta data describing type and size of the payload data. This meta data is generated on the fly, at the ingest of input data and the conversion of this input data into its serialized representation. This supports schemaless processing and storage, where semantic of data and processing steps performed on data are not dictated by a fixed schema to which all ingested data records are converted. Instead, only structure and type data of each individual define the processing steps that are performed on it.

Although the proposed data formats and processing methods are defined and shaped according to the specific requirements of the application performance domain, where large amounts of individual data records, like log lines, transaction traces, event records or metric records, need to be processed in a fast and efficient way, the proposes technologies are also applicable to other technological fields.

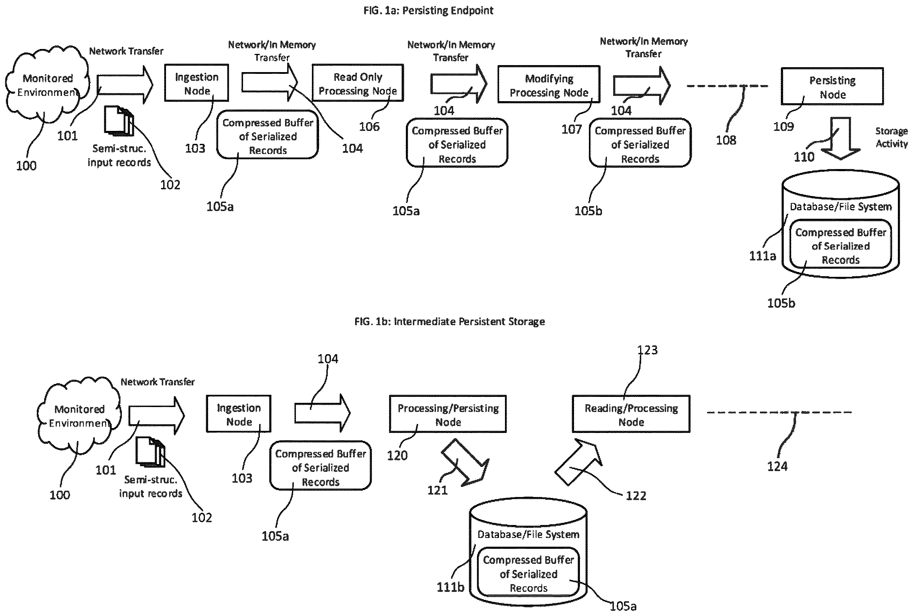

Coming now to FIGs. 1a and 1b, which depict two different variants of distributed pipeline systems, where the variant of FIG. 1a performs persistent storage of ingested serialized records only at the end of the processing chain, while the pipeline shown in FIG. 1b also performs intermediate persistent storage of serialized records, followed by the possibly delayed, reading of the persisted serialized records for additional processing steps.

The distributed pipeline system depicted in FIG. 1a receives semi-structured input records 102 containing application monitoring data in form of log lines/log files, transaction trace data, metric, or event data, in arbitrary, customer specific form. The input data records may be received from a monitored environment 100 and may be created by monitoring components, like agents or dedicated monitoring interfaces located in the monitored environment 100. The input records may be transferred to one or more ingestion nodes 103 of the distributed pipeline system via a connecting computer network 101. The ingestion node 103 may convert received input records into serialized records, where the created serialized records contain meta data describing type, semantic and structure of the contained payload data, which enables the processing of this payload data in serialized form. Generated serialized records are compressed and stored in a buffer 105a, which may be forwarded to subsequent processing nodes, if specific forwarding conditions for the buffer are met. Exemplary forwarding conditions include but are not limited to time elapsed since creation of the buffer, number of serialized records contained in the buffer, or memory size of the buffer. After one or more of those conditions are met, such buffers may be forwarded 104 to a processing node 106, either via a connecting computer network, or via in-memory transfer, if ingest node and processing node reside in the same process or otherwise share the same memory address space.

The read only processing node 106 may analyze the serialized records contained in the compressed buffer and afterwards forward 104 the compressed buffer 105a to another processing node. In the example depicted in FIG. 1a, this is a modifying processing node 107. The modifying processing node may analyze and update serialized records contained in the received compressed buffer 105a and store the updated serialized records in another compressed buffer 105b. Various other read only or modifying processing nodes may receive, analyze and update serialized records 108, until a final persisting node 109 is reached, which persistently stores 110 the compressed buffer 105b in a database, in a plain file on a file system, or by using other means for the persistent storage of data. It is noteworthy that the same format of serialized records is used for their transfer over a computer network, read only analysis, modification, and persistent storage.

Referring now to FIG. 1b, which shows a pipeline variant in which persistent storage of serialized records is performed as an intermediate step. Also in this variant, semi-structured input records 102 are received by an ingestion node 103, transformed into serialized records, which are stored in compressed buffers, and the compressed buffers are then forwarded 104 to subsequent processing nodes. However, in this case, an intermediate processing/persisting node 120 performs persistent storage 121 of received compressed buffers 105a in a persistent medium 111b. A reading/processing node 123 may, potentially at a later time, read the persisted compressed buffers 105a, perform additional analysis and modification activities on contained serialized records and then forward 124 compressed buffers containing serialized records to subsequent processing nodes. Intermediate persistent storage may be used to decouple different stages of processing pipeline. It is noteworthy also here, that network transfer, read-only analysis, modification and persistent storage of serialized records use the same format and structure, no transformation or format change of serialized records is required for those activities.

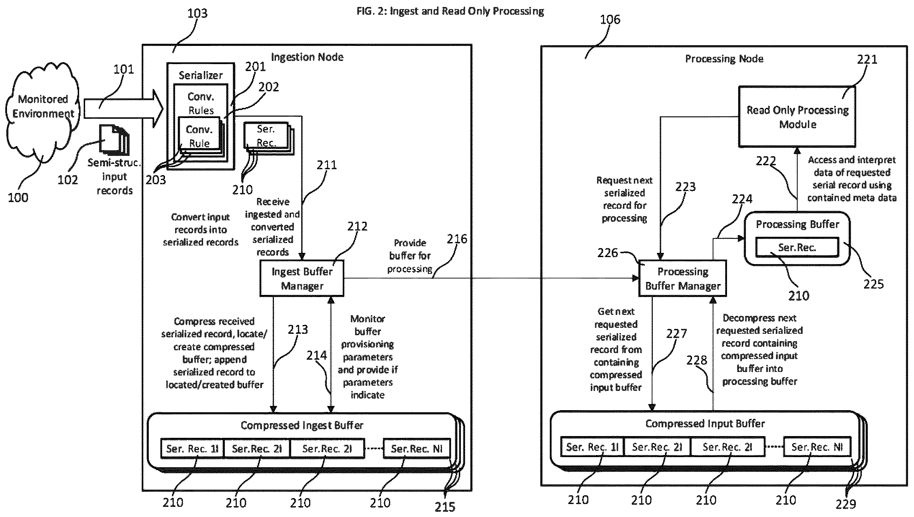

Referring now to FIG. 2 which provides a more detailed block diagram of an ingestion 103 and a read only processing node 106.

An ingestion node 103 receives semi-structured input records 102 from a monitored environment 100 and processes those input records using a serializer module 201, which analyzes those input records and converts them into serialized records 210 according to one or more conversion rules 203.

Created serialized records 210 are forwarded 211 to an ingest buffer manager module 212, which compresses received serialized records and appends them to a compressed ingest buffer 215. The ingest buffer manager may select or create an appropriate compressed ingest buffer for each received serialized record. The ingest buffer to which a serialized record is appended may be selected based on the origin of the serialized record, to create compressed ingest buffers that contain serialized records with homogeneous origins, or it may be selected based on the type of content of received serialized records, like log data, transaction trace data, metric or event data, to create compressed ingest buffers containing serialized records with homogeneous content types.

Next to appending serialized records to compressed ingest buffers, the ingest buffer manager also monitors buffer provisioning parameters for each compressed ingest buffer to determine when a compressed ingest buffer is forwarded to a next pipeline step. Those provisioning parameters may include but are not limited to the time since a compressed ingest buffer was created, the number of serialized records contained in the buffer, or the memory size occupied by the buffer. If one or more of those parameters of a compressed ingest buffer exceed a certain threshold, the ingest buffer manager 212 may provide 216 the buffer to a next processing node of the pipeline.

In the depicted scenario, this is a processing node 106 that only performs read access on received serialized records. A processing buffer manager 226 receives the compressed ingest buffer from the ingest node and stores it as compressed input buffer 229.

A read only processing module 221 may request 223 a next serialized record from the processing buffer manager. On receipt of this request, the processing buffer manger selects 227 the compressed input buffer 229 containing the requested serialized record and the requested serialized record 210 in the buffer 227. The serialized record is read from the compressed input buffer and decompressed 228 and the decompressed serialized record is written 224 to a processing buffer 225. The read only processing module 221 accesses 222 the serialized record in the processing buffer and uses meta data contained in the serialized record describing structure and types of data contained in the serialized record to interpret and analyze the data contained in the serialized record. After processing of the requested serialized record is finished, the processing module may request 223 the next serialized record from the processing buffer manager.

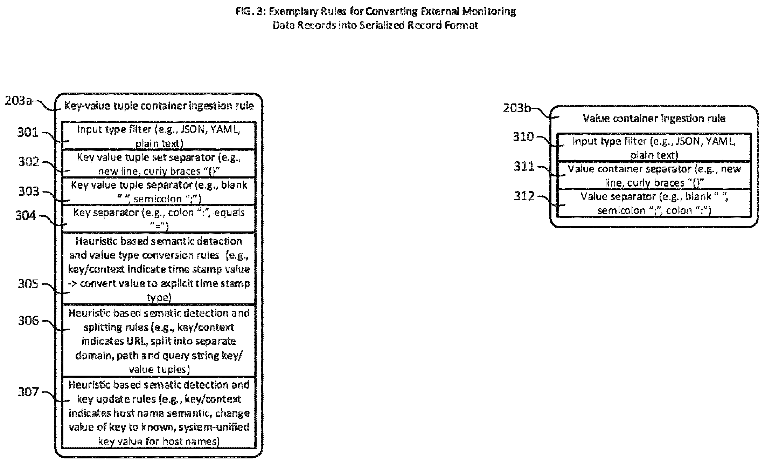

Coming now to FIG. 3 which shows two exemplary conversion rule records 203a and 203b for the conversion of received input records 102 into serialized records 210. Conversion rule 203a is directed to convert incoming records into serialized records containing sets key-value tuples.

Such a conversion rule 203a may contain but is not limited to an input type filter 301, which may be applied type information of received input records to filter those input records to which the conversion rule is directed, a key-value tuple set separator 302, which may specify patterns or characters to select portions of the input record containing key-value tuples that should be included into a created serialized record, a key-value tuple separator 303, which may be used to identify individual key-value tuples, a key separator to identify, for input data representing individual key-value tuples the portion of the input data that represents the key od the key-value tuple, heuristic based semantic detection and value type conversion rules 305, which may be used to determine which type of data an identified value contains and to convert this value into a best matching internal value that can be represented by a serialized record, like for instance to convert numeric input data representing a time stamp into an internal data type directed to the representation of time stamp data, heuristic based semantic detection and splitting rules 306, which may be used to detect input data portions representing compound data and to split the compound data into separate internal key-value tuples representing components of the received compound data, like splitting input data representing a complete URL into individual components representing a domain name, a server name, a path and a query string, and heuristic based semantic detection and key update rules 307, which may be used to detect the semantic of keys of received key-value tuples and to change those keys into internal keys representing the detected semantic.

A value container ingestion rule 203b may be used to create serialized records containing sequences of individual values. Such an ingestion rule may also contain an input type filter 310, to identify a specific input type format like JSON or YAML, to which the ingestion rule is directed, a value container separator 311, which specifies patterns or characters to identify portions of the received input record that contain sequences of values that should be contained in a created serialized record, and a value separator 312, which may be used to separate and identify individual values that should be added to a created serialized record.

In addition to above rule parameters that are directed to identify structure and semantic of ingested input data, ingestion rules may also contain filters to identify portions of ingested input data containing sensitive or private data. Those filters may be used to omit conversion or to mask identified sensitive or private data.

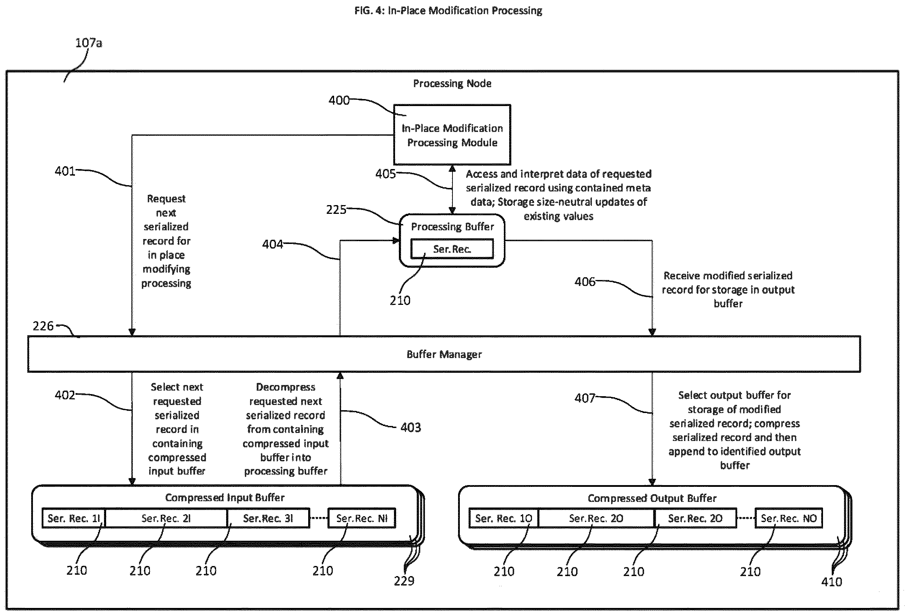

Referring now to FIG. 4, which provides a block diagram of a processing node performing update activities on received serialized records which do not change the memory size of those serialized records. Examples for such modifications include the update of data representing numeric data of fixed size, like Integer or Boolean values.

A processing node 107a operating an in-place modification module 400, which analyses received serialized records and in addition performs limited manipulations of those serialized records that do not change their memory size or structure.

As in the read-only scenario described in FIG. 2, the in-place modification module requests 401 a next serialized record from a buffer manager 226, which on receipt of the request fetches 402 the requested serialized record from a compressed input buffer 229, decompresses 403 it and writes 404 the decompressed serialized record into a processing buffer 225. The in-place modification processing module 400 accesses 405 the decompressed serialized record. Different to the read-only scenario, those accesses also include updates of the serialized record that do not change its size or structure. After processing of the serialized record is finished, the buffer manager receives 406 the modified serialized record, selects a compressed output buffer 410 for the received serialized record, compresses it and appends 407 the compressed serialized record to the selected compressed output buffer.

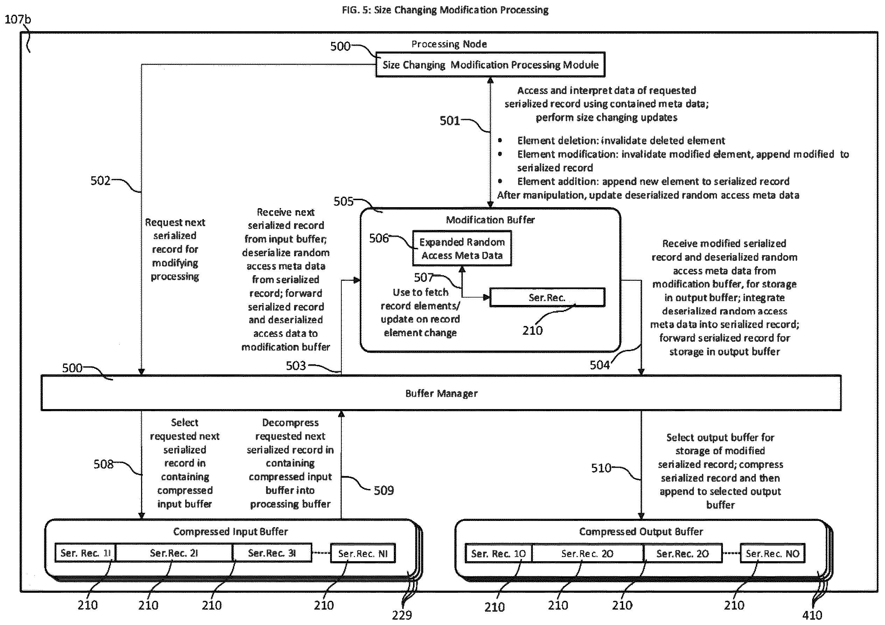

Coming now to FIG. 5, which shows a processing node that performs unlimited updates to received serialized records, including updates that change structure or size of the serialized record. Such size changing updates include changes of data elements with variable size, like Strings, adding, removing or updating keys and values of key-value tuples stored in a serialized record directed to the storage of key-value tuples, or adding, removing or updating values of serialized records directed to the storage of value sequences.

As in the two earlier processing examples shown in FIG. 2 and 4, a processing module (in this case a size changing processing module 500) interacts with a buffer manager 500 to request 502 a next serialized record. The buffer manager locates the requested serialized record in a compressed input buffer 229 and decompresses 509 it.

The decompressed serialized record 210 is then written to a modification buffer 505. In addition, and different to the processing examples described before, random access meta data 506 contained in the serialized record is extracted and stored in the modification buffer separately from the serialized record. Afterwards, the size changing modification processing module 500 performs access and modifications 501 of the serialized record stored in the modification buffer. Those modifications may include deletion or modification of arbitrary data elements contained in the serialized record or adding new data elements to the serialized record. Modifications are performed in a way that minimized updates or rewrites of existing portions of the modified serialized record. Deletions of data elements may e.g. be performed by setting a validity indicator of the deleted date elements to indicate their invalidity. Updates may be performed by marking the data element having the current value as invalid, appending the data element having the new value to the serialized record, and updating the expanded random access meta data 506 to refer to the appended data element instead of the original one. For adding changes, new data elements are appended to the serialized record and the expanded random access meta data 506 is updated to also refer to the added date elements.

After the processing is finished, modified serialized record and expanded random access meta data are received 504 by the buffer manager, which compresses the expanded random access meta data and integrates it with the updated serialized record. This integration may include appending the compressed random access meta data to the modified serialized record and updating an offset stored in the modified serialized record to refer to the new appended random access meta data. Afterwards, the buffer manager may also apply optional compaction steps on the modified serialized record before it is compressed and appended 510 to a compressed output buffer.

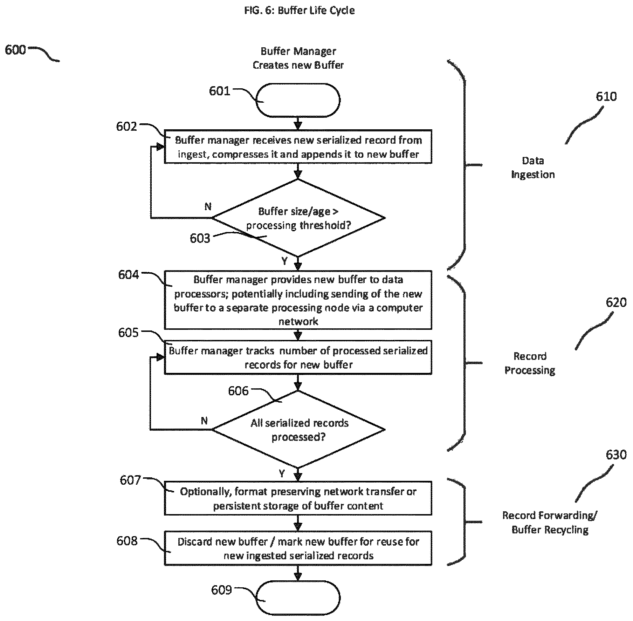

Coming now to FIG. 6, which conceptually describes the life cycle of compressed buffers (e.g., a compressed ingest buffer 215, a compressed input buffer 229 or a compressed output buffer 410) as managed by one or buffer mangers (e.g., ingest buffer manager 212 or processing buffer manager 226), to optimize memory usage by reusing compressed buffers after processing of serialized records stored in those buffers is finished.

The process 600 starts with step 601, when a buffer manager creates a new compressed buffer. A new compressed buffer may for example be created on the receipt of a new serialized record by an ingestion buffer manager 212, when no appropriate compressed buffer (i.e., a compressed buffer containing serialized records from the same origin/monitored environment or containing serialized records for the same type of payload data, like log, transaction trace or metric/event data) is available for the buffer manager. In step 602, the buffer manager receives and compressed serialized records and appends them to the created compressed buffer. Following decision step 603 evaluates buffer provisioning parameters for the created compressed buffer, like its age (i.e., time since it was created), its memory size, or the number of serialized records stored in the buffer. Until those provisioning parameters do not indicate provisioning of the created buffer, the process returns to step 602. Otherwise, step 604 is executed which ends the ingestion phase 610 and starts the record procession phase 620. During the record processing phase, a buffer manager (this may be a different buffer manager instance than the buffer manager that ingested serialized records into the compressed buffer) provides 604 the buffer to data processor nodes (i.e., one or more read-only processing modules 221, in-place modification modules 400 and size changing modification modules 500) to process the serialized records contained in the buffer. In step 605 the buffer manager keeps track of already processed records in the compressed buffer. Decision step 606 determines whether all serialized records contained in the buffer were processed. In case, the record processing phase 620 is finished, and the process continues with the forwarding/recycling phase 630 which starts with step 607. Step 607 may transfer the compressed buffer to another location, where those locations main include a next processing node connected via a computing network, or a persistent storage location. It is noteworthy that no format changes or other updates are required for sending the compressed buffer via a computer network, or for persisting it.

Subsequent step 608 may then either discard the no longer required new buffer, or it may mark it as available for reuse. The process then ends with step 610.

It is noteworthy that discarding/recycling of buffers may always be performed when content of a buffer is transitioned between different memory address spaces, like e.g., between processes that do not share memory. In this case, buffer content needs to be copied from an origin buffer to a destination buffer, and the origin buffer may become available for reuse. Such situations may also occur when ingest of input records, conversion into serialized records, compression and storage in buffers is separated from subsequent processing steps applied on the data.

In case memory allocated for compressed buffers is reused, special measures need to be taken to avoid leaking of data due data artifacts remaining in reused buffers. One exemplary measure would be to only allow reusage of buffers within data origin/ownership boundaries. In this case, a compressed buffer that was once filled with data from a specific monitored environment 100 may only be reused to contain data from the same monitored environment. Another example measure would be to selectively overwrite structure and control data of serialized records contained in the compressed buffer (overwriting the whole buffer with invalid data would not be economically reasonable when compared to discarding the buffer and allocating a new one), thereby leaving the payload data unchanged but rendering it unintelligible due to missing structure data.

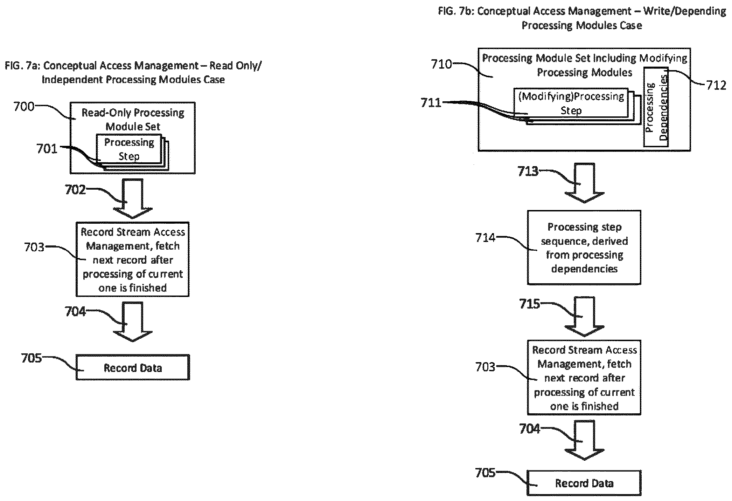

Referring now to FIGs 7a and 7b, which provide examples for the coordination of individual processing modules that operate on one stream of serialized records located in compressed buffers. To minimize processing and time requirements for processing, it is desired to reduce the number of decompression and compression steps for individual serialized records to a minimum. In the best case, a serialized record is once ingested and stored in a compressed buffer. From this compressed buffer it is once decompressed and made available for various processing steps (read-only, in-place modification, size changing modification), and after processing is finished, it is compressed again and written in an output buffer. Due to high volume of ingested data, and also complexity of processing steps, the processing steps typically need to be distributed between different processing nodes (processes running on host computing systems) and the compressed buffers need to be transferred between those processing nodes via a connecting computer network. However, also in this situations it is desirable to decompress incoming serialized records on a processing node once, then perform all processing steps assigned to the processing node and then compress and store serialized record in an output buffer.

FIG. 7a describes a scenario where a set 700 of read-only processing steps 701 perform not modifying access 702 on streams of compressed serialized records stored in buffers. In this case, only generic stream access management 703 provided by a buffer manager is required, which fetches 704 and decompresses a serialized record from underlying compressed record data 705, provides the decompresses serialized record for processing and then fetches and decompresses the next record when processing is finished.

FIG. 7b describes a more complex scenario, based on a set of processing modules 710 that perform also modifying processing steps 711. As some of those steps may depend on modifications performed by other steps, dependency relations 712 may exist, which limits possible processing sequences.

In this case, a processing step sequence 714 may be derived 713 from those dependencies, which may be used to access the generic stream access management 703 of a buffer manager, to first sequentially fetch and decompress serialized records, and then to perform the desired processing steps in an appropriate sequence before the modified serialized records are written to an output buffer.

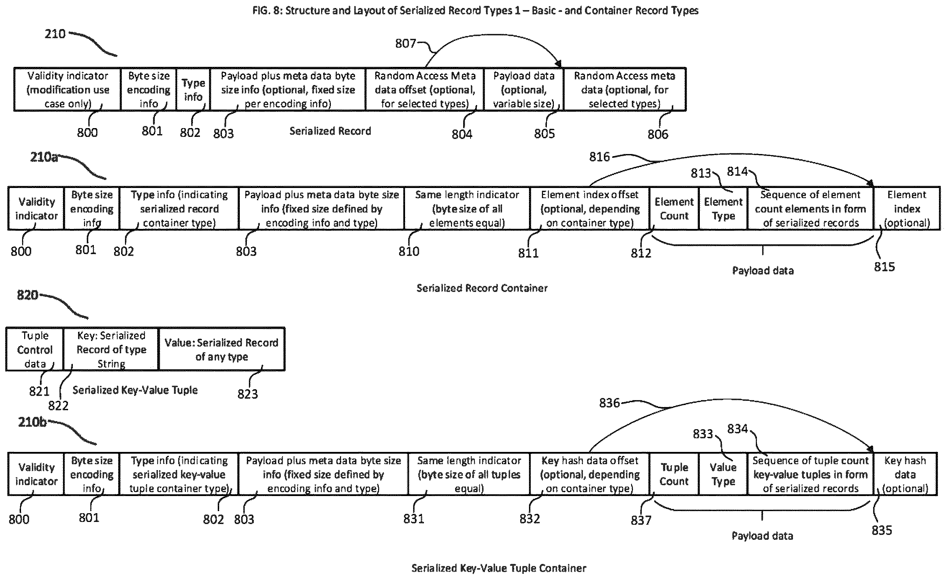

Coming now to FIG. 8, which conceptually describes structure and layout of generic serialized records and of container serialized records, capable to store sets of key-value tuples and of sequences of serialized records.

The layout of serialized records 210 starts with header data of fixed size, which includes a validity indicator 800 indicating whether the serialized record was invalidated because it was overwritten (can be omitted in pure read-only processing pipelines), a byte size encoding section 801, which specifies how the size of the serialized record, in bytes, is encoded in the serialized record, and type information 802, which may be used to determine the type of the data stored in the serialized record. It should be noted that byte size encoding section 801 contains data describing how the byte size of a serialized record is encoded, whereas the byte size information 803 contains data describing the actual size of the serialized record, where the actual byte size information is encoded as specified in the byte size encoding section 801. As an example, byte size encoding 801 info of a serialized record may indicate that the byte size info is encoded as integer value. During reading/decoding of the serialized record, first the byte size encoding info 801 may be read and interpreted. With this information, the actual byte size data for the record can be identified and interpreted.

This fixed size header information only contains data in form of flags or selections and may therefore be stored in a single byte. As an example, two or three bits may be used to store the size encoding type (e.g., encoding values fixed size, where size is given by data type, for integer-based length encoding, or for varint based encoding), four to five bits may be used to encode the data type for the serialized record (e.g., Boolean, Integer, Floating Point/Double, or various combined data types, like IP addresses containing multiple Integer values or geolocation data containing multiple Floating Point/Double values, or complex types, like container types capable to store multiple serialized records), and a validity flag. Example header values using a format with three bits for size encoding, four bits for type encoding and one bit for validity are shown in table 1 below.

**Table 1: exemplary type encodings**

| Size encoding | Type encoding | Validity | Description |
|---|---|---|---|
| 000 | 0000 | 0 | Type defined fixed size; Boolean; invalid |
| 000 | 0010 | 1 | Type defined fixed size; Integer; valid |
| 000 | 0011 | 1 | Type defined fixed size; Geolocation; valid |
| 001 | 0000 | 1 | Integer encoded variable size; Serialized record container; valid |
| 001 | 0001 | 1 | Integer encoded variable size; Serialized key-value tuple container; valid |
| 010 | 0000 | 1 | Varint encoded variable size; String; valid |

The exemplary header data format used in table 1 assigns 3 bits to specify the size encoding, four bits for type identifiers, and one validity flag. The first three rows show examples for data types for which the type already determines the required storage space, like Booleans, Integers, or a predefined Geolocation format. Those data types need no extra size information data and therefore share the same size encoding value "000", which indicates that no extra size encoding is stored. The following two rows show container data types, for which required storage size varies, followed by a row containing the header encoding for the type string, where the length is encoded in form of a Varint. A Varint is a space saving variant for encoding integers that takes into account that representing and storing small integer values requires less memory than storing large integer values. Varint typically stores the bytes of an integer value in order of ascending significance and reserves one bit of each byte as indicator to determine whether a subsequent value byte follows.

Actual size information data 803 may follow the type information data 802 for types for which size information cannot be derived from the type information. If such size information data is available, the memory size required to store this size information can be determined using the byte size encoding data 801 of the serialized record. As an example, size information cannot be derived from type information for variable sized types, like Strings. In this case, next to type information specifying that following payload data represents a String, additional data 803 specifying the byte size of the serialize record containing the String is required. The format in which this byte size data is stored is specified in the byte size encoding information 801 of the serialized record. As a first example, byte size encoding information 801 may specify that the byte size is stored as one byte value, in this case the first byte after type information 802 may be read and interpreted as byte size information of the serialized record. As a second example, byte size encoding information may indicate that the byte size is stored as an integer. In this case, memory size representing an integer value (i.e., 4 bytes) following the type information may be read and interpreted as byte size information of the serialized record. Examples for types for which no addition byte size information 803 is required include Boolean, Integer or Geolocation types. For these types, the type information itself implicitly defines the memory size of the serialized record containing the type. A Boolean, Integer or Geolocation type will always require the same amount of memory, regardless of the actual Boolean, Integer or Geolocation value that is stored as payload data of the serialized record.

Size information 803 is followed by an optional random access meta data offset field 804. This offset field is only available for container variants of serialized records, like serialized record containers 210a or serialized key-value tuple containers, which themselves contain sets or sequences of serialized records. The random access meta data offset field points 807 to the location of a random access meta data section 806, which is located after payload data 805 which stores the actual payload data of the serialized record.

Validity indicator 800, byte size encoding information 801, type information 802 and optional payload size data 803 and random access meta data offset 804 together form a payload size independent header data section 808 of the serialized record. Therefore, this header section can be read and interpreted without reading actual payload data. Access data for stored payload data, which is generated from ingested payload data, and for which also the size is dependent on the payload data, like random access meta data 806 is not stored in the payload size independent header data section. Such random access meta data may be appended to actual payload data, and only an offset value, pointing to the location of the random access meta data within the serialized record may be stored in the payload size independent header data section 808, as the storage size of this offset value is also independent of the actual payload size.

A serialized record container 210a is a specialized form of a serialized record 210 dedicated to the storage of sequences of serialized records of variable length. Therefore, serialized record containers 210a also contain validity indicator 800, size encoding data 801 and type encoding data 802, as "generic" serialized records 210.

In case of a serialized record container, byte size encoding data 801 may indicate a variable size that is stored in the serialized record, like integer size encoding and type encoding data 892 indicates a serialized record container type. Size data 803 may be stored in the form specified by the size encoding data 801, e.g., in form of eight bytes representing an integer value.

Some embodiments of serialized record containers may also contain a same length indicator 810, which may be used to identify serialized record containers that only contain serialized records having the same length. This information may be exploited for locating individual serialized records contained in the serialized record container, because if it is known that all records have the same size, it is sufficient to determine the size of one record to calculate offset/address of all contained records.

In the general case, where sizes of contained serialized records differ, and random access to those records is required, random access meta data 815, in form of an element offset index, and location data for the offset index 811, may be added to the serialized record container.

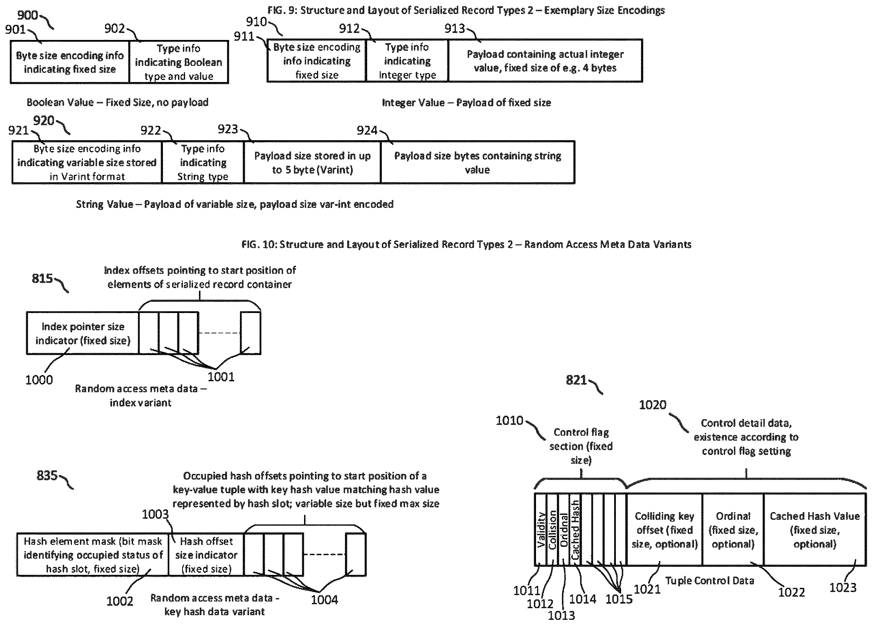

The index offset 811 may be located before payload data of the serialized record container, consisting of element count 812, element type 813 and the actual sequence of contained serialized records 814, and point 816 to the location of the element offset index 815. The element index offset 811 contains one offset value, which points to the location of the element index 815 of a serialized record container. The element index 815 represents an array of offsets to element records contained in the serialized record container. Format and byte size of element index offset 811 may be fixed, e.g., a four-byte integer, and format and size of elements of the element index 815 may be specified in a header element of fixed size of the element index, like a index pointer size indicator. For details see the detailed description of the element index in FIG. 9.

Placing an offset pointer 811 before the payload data and the actual offset index 815 after the payload data has advantages for the incremental creation of serialized record containers during ingest. During ingest, new serialized records may incrementally be appended to a continuous memory area of the serialized record container, and index data containing offsets for each appended serialized record may be created in another memory location. Before the first element is appended to the continuous memory area, a placeholder value for the index offset may be appended to the continuous memory area. When the ingest process is finished, the created index data may be appended the continuous memory area of the serialized record container, and the index offset may be updated to the offset of the index data in the continuous memory area. This method has the advantage that only append operations need to be applied on the continuous memory area storing the serialized record container, no move, delete, or update operations are required.

Element count 812 may be used to store the number of serialized records contained, and element type 813 may be used to store information about the type of the serialized records stored in the serialized record container. As an example, if the types of records stored in the container are homogeneous, the element type may indicate this type. If the element types are not homogeneous, element type filed may be set to a value indicating arbitrary types (e.g., a type identifier indicating "any" type).

Element index offset 811, element count 812 and element type 813 may have a constant storage size. As an example, storage size may be 4 bytes for the element index offset, 3 bytes for the element count and one byte for the element type.

For serialized record containers 210a, byte size information 803, same length indicator 810 and element index offset 811, are stored before any serialized record 210 contained in the serialized record container.

Serialized key-value tuple containers 210b are serialized records directed to contain sets of serialized key-value tuples 820. Serialized key-value tuples 820 may contain but are not limited to tuple control data 821, containing validity, tuple iteration order, or access data (for details see FIG. 10), a key segment 822 of type String that, uniquely identifies the key-value tuple within the containing serialized key-value tuple container 210b, and a value segment containing a serialized record of any type that is associated with the key of the tuple.

Same as serialized record containers 210a, also serialized key-value tuple containers 210b contain a validity indicator 800, size- and type encoding data 801 and 802, and actual storage size data 803.

Further, serialized key-value tuple containers may, in some variants, contain same length indicator 831, which may be used to indicate whether all key-value tuples contained in a serialized key-value tuple container have the same size. As in the serialized record container case, information that all contained key-value tuples have the same length may be used for fast random access to individual key-value tuples.

Similar to serialized record containers, also serialized key-value tuple containers store an offset pointer 832 pointing 836 to random access meta data in form of key hash data 832, which is stored after variably sized payload data of the serialized key-value tuple container consisting of tuple count 837 (for storage of the number of tuples contained in the container), tuple value type data 833 (if value types are homogenous, specifying the type of those values, otherwise specifying "any" type), and the actual sequence 834 of serialized key-value tuples 820 contained in the serialized key-value container.

Although variants of serialized records may deviate from the here described sequence of data sections, it is required that data section of fixed or determinable size, like validity indicators, size- or type encoding data, or size data storage, are placed before data sections of variable size, like the sequence of serialized records contained in a serialized record container, or the sequence of serialized key-value tuples contained in a serialized key-value tuple container. If data is derived from a data section of variable size, like key hash 835 data or element index data 815, it is desired to store an offset pointer of fixed size before the section of variable size, store the derived data after the section of variable size and then set the offset pointer to point to the storage location of the derived data.

For serialized key-value tuple containers, byte size 803 and key hash data offset 832 are stored before any serialized key-value tuple contained in the serialized key-value tuple container.

Referring now to FIG. 9, which visually describes some exemplary type variants of serialized records that are not directed to contain other serialized records.

To represent Boolean values 900 in serialized form, both type and value may be encoded into type encoding data, resulting in one type encoding for Boolean "true", and another one for Boolean "false". As a consequence, no additional data, except validity, byte size encoding 901 (which is set to indicate fixed size with storage size zero) and type encoding data 902 (which combines type and value for Booleans) is required for the serialized storage of Boolean values.

Serialized Integer values 910 may be represented by size encoding data indicating fixed size 911, type encoding data indicating 912 an Integer data type (and in addition also implicitly defining the storage size required for the storage of the Integer value), and payload data 913 for the storage of the actual value (preferably 4 bytes).

An exemplary serialized representation of a String value may start with a size encoding section 921 indicating a variable payload size, which is stored in Varint format, type encoding data 922 specifying the type String, an actual size storage section 923 of up to five bytes length, containing size information for the String value, and a storage section 924 for the actual String value.

Referring now to FIG. 10, which describes structure and functionality of random access meta data, like element index 815, or key hash data 835.

An element index 815 may start with an index pointer size indicator 1000 of fixed size (preferably one byte), to specify the size of index pointers stored in the index, followed index elements 1001 of the size specified by the index pointer size indicator. The number of index elements, and therefore also the storage size of the element index is given by the element count 812 stored in the serialized record container containing the element index.

The index pointer size may be chosen at the end of ingest or of manipulation operations performed on a serialized record container, by determining the maximum offset of a serialized record contained in the serialized record container and selecting the smallest index pointer size that can represent this maximum offset. Index pointer sizes may range from 1 to 4 bytes.

It is noteworthy that the sequence of the index offsets 1001 contained in the record offset index 815 may differ from the sequence in which serialized records 210 are stored in a serialized record container 210a. Therefore, the record offset index 815 defines a sequence of the serialized records stored in a serialized record container that is independent of the sequence in which those serialized records are stored in the serialized record container.

A key hash data section 835 may start with a hash element mask 1002 of fixed size, representing a bit mask, where each bit represents occupation state of a fixed set of hash slots.

An exemplary key hash data may contain 64 hash slots, and for a key of a key-value tuple that is added to an enclosing serialized key-value tuple container, a hash value may be calculated and mapped to a value form 0-63. The corresponding bit in the hash element mask (i.e., bit 0 for hash slot 0, bit 2 for hash slot 2, etc.) may be set to "true".

A hash offset size indicator of fixed size 1003 follows the hash element mask and may be used to specify the size of the following hash offsets 1004. Same as index offset sizes, also hash offset sizes may be chosen based on the offset range that needs to be covered. The number of hash offsets 1004 and thereby also the storage size of the hash data section 835 is determined by the number of set bits in the hash element mask 1002.

Tuple control data 821 may contain a control flag section 1010 of fixed size (preferably one byte), which specify available control detail data, and a control detail data section 1020 of variable size, where the content of the control detail data section is defined by the control flag section.

The control flag section may contain but is not limited, to a validity flag 1011 determining the validity of the key-value tuple to which the control data 821 belongs, a collision indicator 1012 indicating whether a hash collision between the key of the key-value tuple containing the control data and the key of another key-value tuple occurred and therefore a collision offset 1021 is available in the control detail data section 1020, an ordinal indicator 1013, indicating whether ordinal data 1021 is available in the control detail data section, where ordinal data 1021 may be used to define iteration orders over key-value tuples contained in a serialized key-value record container, and a cached hash indicator 1014, specifying whether the control data contains a cached hash value for the key, which may be used if the hash value is used frequently to avoid repetitive recalculations.

The colliding key offset 1021 may only be present if a hash collision occurred with the key of another key-value tuple and point to the position of the colliding key. The colliding key offset may be of fixed (preferably 4 byte) or determinable size, according to the hash offset size indicator.

An ordinal value 1022 may only be present if a specific iteration order over the key-value tuples of a key-value tuple container is desired. Such iteration orders may contain but are not limited to an insertion order, or alphanumeric order. A specific ordinal number may be determined for each key and stored in the ordinal value. If present, the ordinal value has a fixed size (preferably 4 bytes).

The cached hash value 1023, which contains the hash value for the key of the tuple is also of fixed size (also preferably 4 bytes).

It should be noted that all offsets stored in serialized records, like element index offset 811, key hash data offset 832, and the offsets stored in index elements 1001, hash offsets 1004, or collision offsets 1021 are relative to the starting position of the serialized record to which the offsets belong.

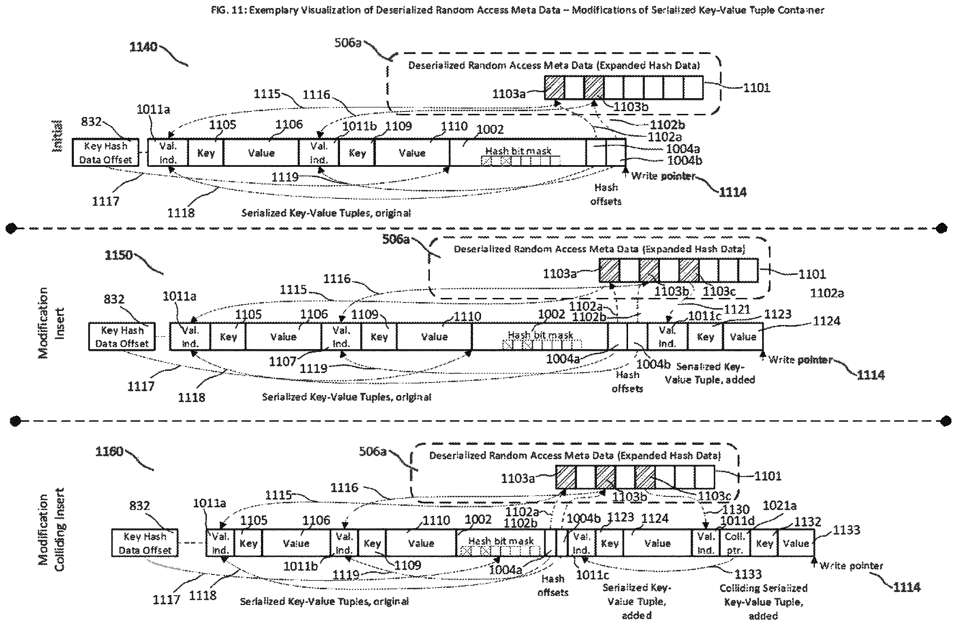

Coming now to FIG. 11, which visualizes the preparation of a serialized key-value tuple container record 210b for modification, and the performance of two modification operations on the container record.

State 1140 represents status of the record and deserialized/expanded hash data 1100, state 1150 shows the status after insert of a new key-value tuple and state 1160 shows the state after insert of another key-value tuple for which a hash collision exists with key-value tuple that is already present in the record.

During manipulation preparation, a continuous memory area may be created, the serialized record may be appended to the continuous memory area, and a write pointer 1114 may be set to indicate the last position of the continuous memory area occupied by the serialized record. In addition, expanded random access meta data 506b, may be created separately from the continuous memory area, in form of an array of hash offsets 1101.

The array of hash offsets may have the same size as the hash elements mask (i.e., number of elements equals the number of bits in the mask). Hash offsets 1004a and 1004b are copied to elements of the hash offset array 1101 according to the bits set in the hash element mask. In the concrete example, bit 0 and 2 of the bit mask are set, therefore hash offset 0 1004a is copied 1102a to position 0 1103a of the array and hash offset 1 1004b is copied 1102b to position 2 1103b of the array. Other elements of the array may be initialized to a value indication a not occupied hash slot. As an example, those elements may be set to an offset of 0 or to a negative offset.

After the initialization phase, occupied elements of the hash offset array point to the same key-value tuples as their corresponding hash offsets stored in the serialized record. E.g., element 1103a points 1115 to the start position of a first key-value tuple (represented here by its validity indicator 1011a, key 1105 and value 1105), to which also hash offset 1004a points 1118, and so on.

The key hash data offset 823 of the record points 1117 to the start position of the hash bit mask 1002 (first element of the key hash data section of the record).

A first manipulation of the record, as depicted in the middle section 1150 of FIG. 11, may insert a new key-value tuple to the record. The new key-value tuple is represented here by its validity indicator 1011c of its tuple control data 820, its key 1123 and value 1124.

The control flag section 1010 of the tuple control data may be set to indicate validity, no collision, no ordinal and no cached hash value, resulting in a tuple control data section consisting only of the control flag section.

During insert of the new key-value tuple, its offset may be determined, e.g., as value of the write pointer 1114 before the tuple was appended to the continuous memory area, a hash value for the key 1123 may be calculated, and the determined offset may be written to the element of the hash offset array 1101 indicated by the hash value. In the depicted example, the calculated hash value may be 4, and the determined offset is therefore written to element 4 1103c of the hash offset array 1101. Element 4 now points 1121 to the start of the new added key-value tuple. After the insert operation, the write pointer is set to point to the end of the added key-value tuple.

A second exemplary manipulation of the record, as depicted on the lower section 1160 of FIG 11, may add another key-value tuple to the record, but in this case, the hash value of key of the second added tuple may collide with the key of an already present tuple, i.e., the hash values for two different keys are equal).

To consider and correctly handle hash collisions, the insert process may, before a new tuple is appended to the continuous memory area, determine whether a hash collision exits with an already present tuple exists. In case of an existing conflict, a tuple control data section indicating validity, and an existing hash collision (collision flag 1012 set to true), and containing a collision offset 1021 may be appended to the continuous memory area before key and value of the tuple are appended. The collision offset 1021 of the appended tuple is set to point to the start position of the already present tuple with which it collides. In case multiple colliding tuples exist, the collision offset may be set to the colliding tuple that was last appended to the continuous memory area (i.e., the colliding tuple with the highest offset).

The element of the hash offset array 1102 that corresponds to the hash value for which the collision was detected (i.e., the element at the array index that equals the calculated hash value), is set to the offset of the new added colliding tuple.

This procedure creates collision lists that originate at a hash table element (i.e., element of a hash offset array 1101, or hash offset 1004 as part of key hash data), traverse over inserted conflicting tuples against insert order, until a first conflicting tuple is reached, for which no conflict was present during insert time. This optimizes storage usage, as collision offsets are only stored if collisions occur. During insert of a colliding tuple, the offset for the last colliding tuple can easily located in the hash table element representing the conflicting hash value.

This procedure may be applied for both ingest and manipulation of serialized key-value container records 210b.

In the concrete conflicting insert operation shown, a key-value tuple with key 1132 and value 1133 is inserted. The hash value for this key collides with the hash value of previously inserted key 1123. Therefore, tuple control data containing a collision offset 1021a is appended to the continuous memory area, and the offset of the previously appended key-value tuple (represented by validity indicator 1011c, key 1123 and value 1124) is stored in collision offset 1021a, which now points 1133 to the start position of the previously inserted colliding key-value tuple. This offset may be fetched from element 1103c of the hash offset array 1103c, which pointed to this offset before the insertion of the colliding key-value tuple. Afterwards, the value stored in element 1103c may be updated to point 1130 to the start of the newly added tuple.

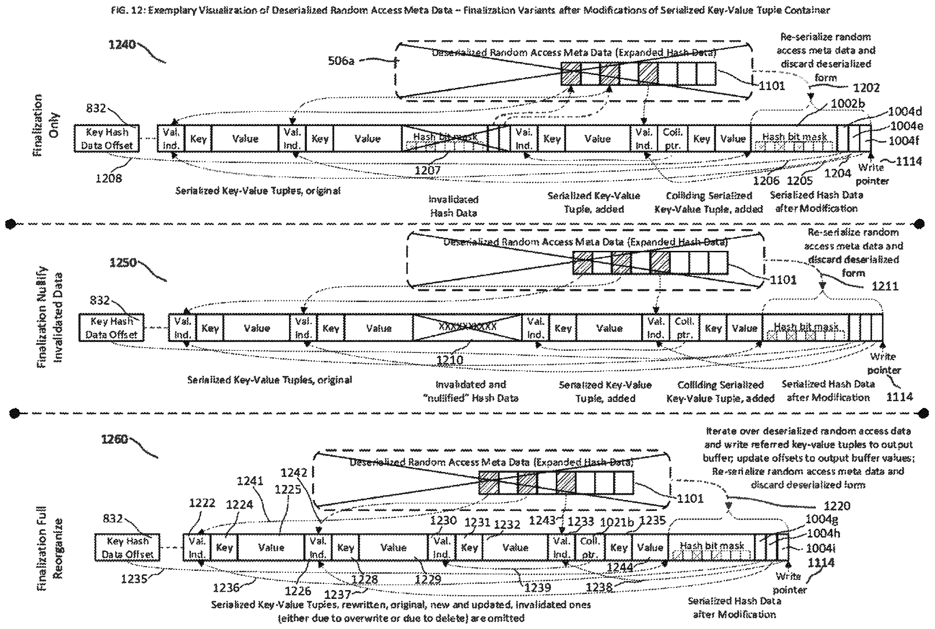

Referring now to FIG. 12, which depicts three different variants of finalizing a serialized key-value tuple container record 210b after desired modifications of the container are finished. The finalization variants are explained based on the status of the modified serialized key-value tuple container after all modification steps shown in FIG. 11.

The first variant, shown in the upper section 1240 of FIG. 12 aims to minimize the finalization effort. Only expanded random access meta data is compressed 1202 and appended to the continuous memory area assigned to the record, and the offset indicating the position of the hash meta data 832 is updated to point 1208 to the new, appended version of the hash meta data 1002b. The original hash meta data 1207 remains unchanged but is no longer accessible due to the updated key hash data offset 1208. All invalidated portions of the record, like the original hash meta data 1207, but also key-value tuples that were invalidated during the manipulation sequence remain unchanged in the continuous memory area, except for changed validity indicator 1011 of deleted or overwritten key value tuples to indicate that they are no longer valid.

Compression of the expanded hash data in form of an array of hash offsets 1101 may first create a hash bit mask, as a bit set with the same size as the array of hash offsets (number of bits in the bit set equals number of elements in the array of hash offsets). The hash bit mask may then be appended to the continuous memory area. Afterwards, the compression process may iterate over the array of hash offsets. During the iteration, elements of the array that contain a valid offset (i.e., a value greater than zero) are identified, the corresponding bit of the hash bit set (bit in the bit set having the same index as the identified element of array of hash offset) this set to true, and the offset is appended to the continuous memory area. Afterwards, the expanded random access meta data area 506a is discarded, and the continuous memory area, which now contains the finalized serialized key-value tuple container, may be provided for further processing steps, like compressing it and appending it to a compressed output buffer 410.

In the concrete example shown in section 1240 of FIG. 12, the finalization process may first compress the decompressed random access meta data 506a and append 1202 the compressed random access meta data in form of hash bit mask 1002b, and hash offsets 1004d, 1004e and 1004f to the continuous memory area of the serialized record. After creation of the compressed form of the random access meta data, the decompressed random access meta data 506a may be discarded. The hash offsets point to starting positions of respective key value tuples, and the key-hash data offset 832 is updated to point 1208 to the start position of the appended hash bit mask 1002b. Updating the key hash data offset invalidates 1207 original hash bit mask and hash offsets, because they are no longer reachable. The write pointer 1114 may be updated to point to the end if the appended random access meta data, and the size information data 803 may be updated to the value of the write pointer to contain the new size of the record after its finalization.

The finalization variant depicted in section 1250 of FIG. 12 is based on the above-described variant. This variant in addition overwrites sections of the continuous memory area of the serialized record that contain data that was invalidated during the manipulation of the record with uniform values. As an example, those values may be overwritten with sequences of zero bits. Invalidated sections may contain but are not limited to sections containing original random access meta data or sections containing deleted or overwritten key-value tuples. The manipulation process may either use original data stored in the manipulated serialized record, like original key hash data offset 832, or original hash offsets 1004 to identify and overwrite those areas, or it may maintain separate data structures to identify those invalidated sections.

In the concrete example shown in section 1250, only the original random access meta data section 1210 is overwritten during finalization. The idea behind overwriting invalidated sections with uniform values is that the compression ratio of uniform bit sequences is higher than the compression ratio of varying bit sequences.

The most memory efficient, but also most CPU intensive finalization variant is shown in section 1260 of FIG 11. In this variant, the deserialized random access meta data is used to iterate over the key-value tuples of the record that are still valid after the manipulation process, and to write those key-value tuples to a new consecutive memory area representing the updated record. Before the still valid key-value tuples are appended, header information for the serialized key-value tuple record 210b, as shown in FIG 8 may be appended to the new consecutive memory area, where placeholder values may be used for values that are not yet known, like random access meta data offset 832 or size information data 803. A write pointer 1114 may also be maintained for the new consecutive memory area and set to the position at the end of the written header data.

The finalization process may iterate over elements of array of hash offsets 1101 representing the decompressed random access meta data and select those elements containing valid offsets. For each valid offset, the corresponding key-value tuple may be copied from the old consecutive memory area to the new one, and the value stored in the offset element may be set to the value that the write pointer of the new consecutive memory area had before the key-value tuple was copied. Afterwards, the write pointer of the new consecutive memory area may be updated. This way, the hash offsets stored in the array of hash offsets 1101 point to correct offset in the new consecutive memory area after copying is finished.

In addition, also collision offsets 1021 may be updated to point to correct offset in the new consecutive memory area. The copy process may follow collision offsets to identify colliding key-value tuples, and if a colliding key-value tuple is also valid (not overwritten or deleted), the copy process may copy the key-value tuple to the new consecutive memory area and set the collision offset of the previously copied key-value tuple to the value of the write pointer of the new consecutive memory area before the colliding key-value tuple was copied. This process stops when a key-value tuple without collision offset 1012 is found, which represents the end of the collision list. The above-described copying process of colliding key-value tuples effectively reverses the insert order of colliding key-value tuples, as the last inserted key-value tuple is copied first. If a copying process is desired that retains the insert order of colliding key-value tuples, the copy process may first traverse to the end of the collision list and then perform the copying and collision offset update process in a reverse order, from the last entry in the collision list to the first one.

After copying of key-value tuples to the new consecutive memory area is finished, also all offsets stored in the array of hash offsets 1101 and all collision offsets 1021 are updated to point to correct locations in the new consecutive memory area. As final step, the array of hash offsets 1101 may be compressed to create a hash element bitmap 1002 and hash offsets 1004, and appended to the new consecutive memory area, as already described for the other finalization variants. The key hast data offset 832 may be set to the value of the write pointer before the key hash data 835 (comprising hash bit mask 1002, hash offset size indicator 1003 and hash offsets 1004) was appended, and the size data 803 to its value after the key hash data (also referred to as random access meta data 807 for the generic serialized record case) was appended.

In the concrete finalization example shown in section 1260 of FIG. 12, the four valid key-value tuples, represented by validity indicator 1222, key 1224, value 1225 for the first tuple, validity indicator 1226, key 1228 and value 1229 for the second tuple and validity indicator 1230, key 1231 and value 1231 for the third tuple and validity indicator 1233, collision pointer 1021b, key 1235 and value 1244 for the fourth tuple, are already copied to the new consecutive memory area. Also offsets stored in the array of hash offsets 1101, collision offsets 1021 are already updated. The first entry of the array of hash offsets 1101 points 1241 to the first key-value tuple, the second one points 1242 to the second tuple and the third one points 1243 to the third tuple. The collision offset 1021b of the third tuple points 1239 to the colliding second tuple.

The random access meta data was already created out of the array of hash offsets 1101 and appended 1220 to the new consecutive memory area, and the hash offsets 1004g, 1004h, and 1004i, point 1236, 1237 and 1238 to correct offsets locating corresponding key-value tuples in the new consecutive memory area. The key-hash data offset 832 in the new consecutive memory area is also already set to point 1235 to the random access meta data.

In this state, the expanded random access meta data 506a may be discarded and the new consecutive memory area, which now contains a valid, updated serialized key-value tuple container, may be forwarded to next processing steps, like compressing it and appending it to an output buffer.

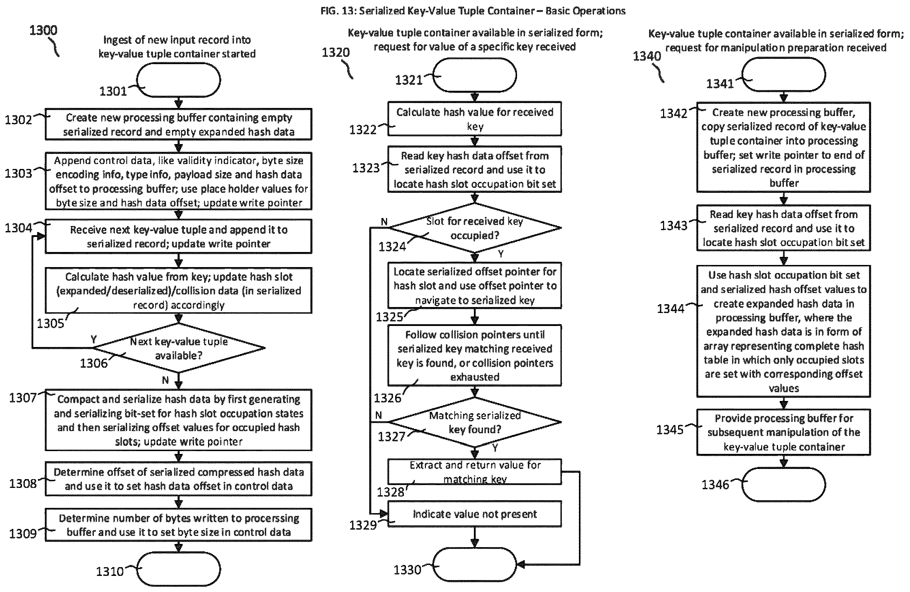

Coming now to FIG. 13, which procedurally described basic operations that may be performed on serialized key-value tuple containers, like creating of new serialized key-value tuple containers from ingested data, requesting a value from a serialized key-value tuple containers, or preparing a serialized key-value tuple containers for manipulation.

The process of creating a new serialized key-value tuple container 210b from ingested data is described flowchart 1300.

The process starts with step 1301 when ingest of a new input record starts. In following step 1302 a new processing buffer, containing an empty serialized record, e.g., in form of an empty continuous memory area, and empty expanded hash data, e.g. in form of an array of integer values, where the integer values are set to indicate invalid offset values (i.e., zero or negative values), where the size of the array equals the number of hash slots of the hash table stored with the serialized key-value tuple container. Preferable, 64 hash slots/array elements are used.

Step 1303 may afterwards append control and header data, including validity indicator 800, size 801- and type 802 encoding data, size information data 832, and key hash data offset data 832 to the continuous memory area. For data, which is not yet known, like size information 803, or hash data offset 832, only storage area may be reserved in the continuous memory area, e.g., by appending placeholder values. A write pointer may be updated after each append to the continuous memory area to represent the number of bytes that were appended to it.

After step 1303, consecutive memory area and expanded hash data are ready to store serialized key-value tuples.

Step 1304 receives the next key-value tuple and appends it to the continuous memory area storing the serialized key-value tuple container. The key-value tuple may be extracted from receive input records, according to one or more key-value tuple container ingestion rules 203a.

Following step 1305 may then calculate a hash value for the key of the received key-value tuple and update the hash slot of the expanded hash data corresponding the hash value by setting it to the offset for the appended key-value tuple. In the event of an occurred hash collision (i.e., the hash slot is already set to a valid offset), also collision offset data may be created and added to the continuous memory area.

Afterwards, decision step 1306 may determine whether additional key-value tuples for the currently created serialized key-value tuple container are available in ingest data. In case more key-value tuples are available, the process continues with step 1304.

Otherwise, step 1307 is performed, which compacts the expanded hash key data (i.e., by creating a hash element bit mask 1002, and appending valid hash offsets to the bit mask, as described above), and appends the compacted hash key data to the continuous memory area. Following steps 1308 and 1309 then update hash data offset 832 and size information 803, e.g., by setting the hash data offset 832 to the value of the write pointer before the compressed hash key data was appended and the size information to the value of the write pointer after the compressed hash key data was appended.

The process then ends with step 1310.

Read access to an already available serialized key-value tuple container 210b, to request the value for a specific key, is show in flow chart 1320.

The process starts with step 1321, where a serialized key-value tuple container is available in serialized form and a request for a value of a specific key (containing the value of the key) is received.

Following step 1322 may calculate a hash value for the received key, which identifies a specific hash slot 1004 of the key hash data 835 of the serialized key-value tuple container 210b.

Subsequent step 1323 may then read the key-hash data offset 832 form the serialized key-value tuple container 210b to locate the key hash data 832. It may then read the bit from the hash element bit mask 1002 which represents the hash slot identified by the hash value calculated for the received key. If the value of the read bit indicates that the hash slot is not occupied, decision step 1324 continues the process with step 1329, which indicates that the requested value is not present, and the process ends with step 1330.

If otherwise the bit indicates that the hash slot is occupied, step 1325 is executed, which locates the offset pointer for the hash slot. Step 1325 may use the number of bits of the hash element bit mask that are located before the bit for the identified hash slot to identify the hash offset 1004 representing the identified hash slot (the compressed hash data only contains offset data 1004 for occupied hash slots, not occupied hash slots are represented by not set bits of the hash element bit mask 1002).

Following step 1326 then locates and reads the key-value tuple 820 identified by the hash offset, and follows collision offsets stored in the identified and colliding key-value tuples until either a key-value tuple is found with a key that 822 matches the received key, and that has a validity indicator 1011 indicating that it was not deleted or overwritten, or if the end of the collision list is reached (i.e., a key-value tuple 820 is found, with a collision indicator 1012 indicating no further collision).

If a matching and valid key-value tuple was found in step 1326, decision step 1327 continues the process with step 1328, which extracts and returns the value of the identified key-value tuple.

Otherwise, decision step 1327 continues with step 1329, which indicates that the desired value is not present.

The process then ends with step 1330.

The preparation of a serialized key-value tuple container 210b for size changing modifications is shown in flow chart 1340.

The process starts with step 1341, when size changing modification preparation for a specific serialized key-value tuple container 210b is requested. Following step 1342 may then create a new processing buffer for the record, e.g. by creating a new continuous memory area and copying the serialized key-value tuple container 210b into the continuous memory area. Step 1342 may also set a write pointer to point to the end of serialized key-value tuple container in the continuous memory area.

Afterwards, step 1343 may read the key hash data offset 832 from the record to locate and read the key hash data, and following step 1344 may then create an expanded version of the key hash data in a memory area different from the continuous memory area containing the serialized key-value tuple container. Step 1343 may create an array of integer values having the size of available hash slots, and then set offsets of occupied hash slots elements of the created array using the hash element bit mask 1002 and set offsets of not occupied to invalid values. The expanded version of the key hash data may also be referred to as heap representation of the key hash data. Subsequent step 1345 may then provide the expanded hash data and the continuous memory area containing the serialized key-value tuple container for modification. The process then ends with step 1346.

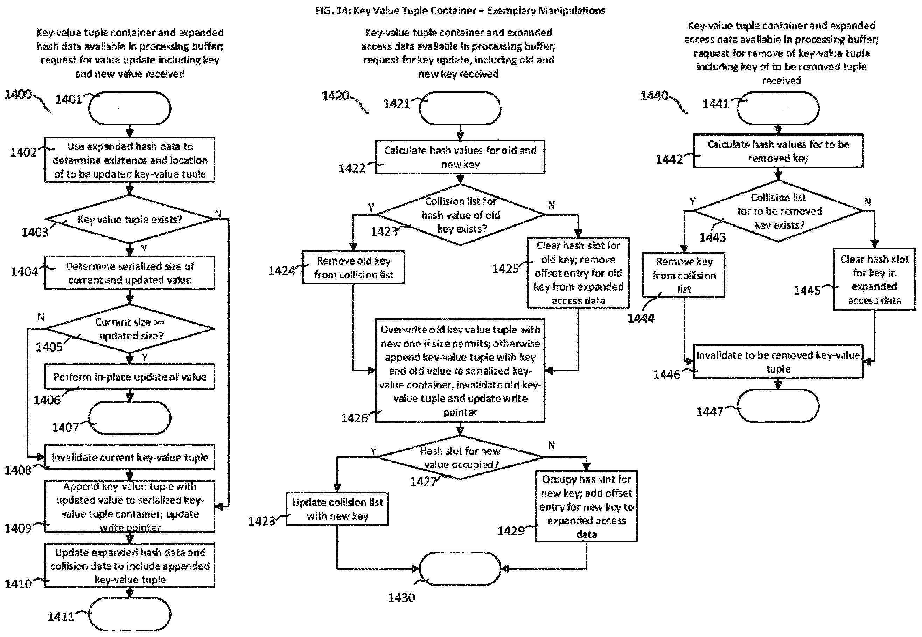

Coming now to FIG. 14, which provides flow charts describing exemplary manipulations of serialized key-value tuple containers 210b.

Flow chart 1400 describes the update of a value of a specific key-value tuple identified by its key, flow chart 1420 shows the update of key of a specific key-value tuple, and flow chart 1440 describes the removal of a key-value tuple.

Updating the value of a key-value tuple starts with step 1401, where a serialized key-value tuple container 210b is available in editable form (e.g., as created by process 1340), and a request to update the value of a key-value pair, including the key of the key-value pair and the new value is received. Following step 1402 may then use the expanded hash data to determine existence and location of the key-value pair that should be updated. Step 1402 may calculate a hash value for the received key, locate the hash slot for the hash value and evaluate the offset stored for the hash slot and existing collision offsets stored in colliding key-value pairs to determine if a key-value pair with a key matching the received key exists. Step 1402 may perform steps as described in process 1320.

Following decision step 1403 may continue the process with step 1409 when no matching key-value pair was found by step 1402, which appends a new key-value tuple containing received key and value to the serialized key-value container 210b. Subsequent step 1410 may then update expanded hash data and, if required, collision data stored in colliding key-value tuples to also contain and address the new added key-value tuple. In this case, the request to update a key value pair is transformed into adding a new key-value pair. Some variant embodiments may instead notify that the key-value tuple for which an update was requested was not available and perform no change of the serialized key-value tuple container 210b in this case. The process then ends with step 1411.

If otherwise 1402 identifies a key-value pair with a key matches the received key, decision step continues the process with step 1404, which determines the serialized size of the value current stored in the serialized record, and the size the new value would have when stored in the serialized record. Step 1404 may read size information 803 for the current value and calculate size information for the new value, e.g., by determining required storage size for header data of the new value (storage size for validity indicator, size- and type encoding, size data storage size etc.) plus required storage size for the actual payload of the new value. Following decision step 1405 may then compare the size of the current value with the size requirements of the new value and continue with step 1406 if the size of the current value is equal or greater than the size required to store the new value. In this case, in-place modification is possible, because the new value fits into the memory area of the current value. Step 1406 may overwrite the memory area of the current value with the new value, and the process then terminates with step 1407. No updates to key hash data is required in this case, because the location of the key-value pair is not changed. The storage of the new value needs to be aligned with the storage of the key of the key-value tuple, i.e., the new value may be stored directly following the key.

In case the size of the new value exceeds the size of the current one, decision step 1405 continues the process with step 1408, which may invalidate the current key-value tuple, e.g., by setting its validity indicator 1011 to indicate an invalid key-value tuple.

Following steps 1409 may then append a new key-value tuple containing received key and value to the serialized key-value tuple container, and subsequent step 1410 may update offset values stored for the updated key-value tuple that point to the location of the original key-value tuple to the location of the appended key-value tuple. The process then ends with step 1411.

The processing 1420 of a request to update a key of a key-value tuple contained in a serialized key-value tuple container starts with step 1421, when the serialized key-value tuple container is available in editable form, and a request containing new and old key is received.

Following step 1422 may then calculate hash values for old and new key and identify the hash slots for those hash values. Following decision step 1423 may then determine whether a collision list exists for the old key, and in case a collision exists, continue with step 1424, which removes the key-value tuple having the old key from the collision list. This may be performed by changing collision offsets 1021 of other tuples in the collision list to no longer refer the tuple having the old key. In case no collision exists for the old key, step 1425 is executed, which may free the hash slot occupied by the old key, e.g., by changing the hash offset 1004 of the hash slot corresponding to the old key from the value pointing to the location of the key-value pair having the old key to an invalid offset value. After execution of step 1424 or 1425, hash data for the old key is removed from the serialized record.

Step 1426 then updates the serialized key-value tuple container to contain a key-value tuple with the new key and the old value assigned to the key, instead of the original key-value tuple having the old key.

Step 1426 may first determine whether the storage size of the key-value tuple currently stored in the serialized key-value tuple container equals or exceeds the storage size required to store the key-value tuple with the updated key. In this case, the storage area currently used to store the key-value tuple using the old key may be overwritten with data representing the key-value tuple having the new key. If otherwise the memory area used to store the current key-value tuple is too small to contain the key-value tuple having the new key, the current key-value tuple may be invalidated, and the key-value tuple having the new key may be appended to the serialized key-value tuple container 210b.

Following decision step 1428 then determines whether the hash slot for the new key is already occupied, e.g., by checking whether the offset 1004 corresponding to the hash slot of the new key is already set to a valid offset value. If the hash slot is already occupied, step 1428 may be executed to update the collision list for the hash slot to also include the key-value tuple with the updated key. Otherwise, step 1429 is executed, which occupies the yet not occupied hash slot by setting its offset value to point to the location of the key-value pair with the updated key (appended or overwritten). The process then ends with step 1430.

The removal of a key-value pair having a specific key from a serialized key-value tuple container 210b is shown in flow chart 1440 and starts with step 1441, where the serialized key-value tuple container is available in modifiable form and a request containing the key of the to be removed key-value tuple is received.

Following step 1442 calculates the hash value for the key and identifies the corresponding hash slot. Subsequent decision step 1443 determines whether a collision list exists for the to be removed key-value tuple. Step 1443 may read the collision indicator 1012 of the tuple control data 821 of the key-value tuple addressed by the offset stored in the expanded hash offset entry for the hash slot of the to be removed key-value tuple. If this collision indicator indicates no collision, step 1445 may be executed, which frees the hash slot of the to be removed key-value, e.g. by setting the expanded hash offset entry corresponding to the key of the to be removed key-value tuple to an invalid value.

If otherwise a collision exists for the key of the to be removed key-value tuple, step 1444 may be executed, which removes the key-value tuple from the collision list.

After step 1444 or 1445, step 1446 may be executed which marks the removed key-value tuple as invalid, e.g., by setting the validity indicator 1011 of its tuple control data 821 to a value indicating invalidity. The process then ends with step 1447.

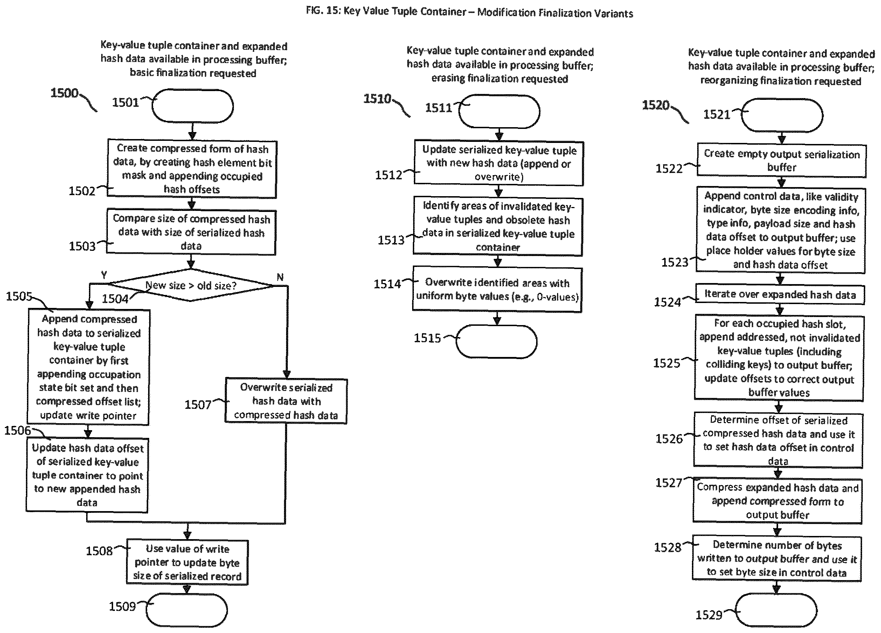

Coming now to FIG. 15, which provides flow charts of three finalization variants for modified serialized key-value tuple containers.

Flow chart 1500 provides a basic finalization variant, in which invalidated portions of the record are retained, and only size data 803, random access metadata 806, and offset data 804 specifying he location of the random access metadata is updated. The finalization variant described in flow chart 1510 in addition identifies and overwrites portions of the serialized key-value tuple container which contain invalid data, e.g., due to removed or overwritten key-value tuples, or due to no longer valid random access meta data, and the finalization process described in flow chart 1520 described a finalization process that performs a full rewrite of the modified serialized key-value tuple containers into a separate output buffer.

The basic finalization process 1500 starts with step 1501, when the modification of serialized key-value tuple container is finished, and basic finalization is requested. Following step 1502 may then create a compressed form of the expanded hash offset data 1101, by first creating a hash element bit mask, in which the bits corresponding to elements 1103 of the expanded hash offset array 1101 which contain valid offset data are set to true, and then appending the valid hash offsets to the hash element bit mask 1002.

Afterwards, step 1503 may compare the size of the new created compressed key hash data 835 with the size of the compressed key hash data currently stored in the serialized key-value tuple container, and following decision step 1504 may continue the process with step 1507 if the size of the new compressed key hash data is not greater than the size of the currently stored key hash data. Step 1507 may then overwrite the current key hash data with the new one.

If otherwise the size of the new key hash data exceeds the size of the currently stored one, step 1505 is executed, which appends the new key hash data 835 to the serialized key-value tuple container, followed by step 1506 which updates the key hash data offset 832 to point to the appended, new key hash data 835.

After step 1506 or 1507, step 1508 is executed, which updates size data 803 of the serialized key-value tuple record. Updating size data 803 and key hash data offset 832 during the finalization may be performed using a write pointer, which maintains the number of bytes written to the serialized key-value tuple container during modification and finalization.

In addition, the new value for the tuple count 812 of the serialized key-value tuple container may be determined by counting the number of valid serialized key-value tuples addressed by hash offsets and collision offsets and setting this number as the new tuple count 812.

The process then ends with step 1509.

The advanced finalization process 1510, which in addition identifies and overwrites invalidated portions of the finalized serialized key-value tuple container, starts with step 1511, when modification of a serialized key-value tuple container 210a is finished, and advanced finalization is requested.

Following step 1512 may then updated the serialized key-value tuple container with new key hash data 835, either by appending it, or by overwriting existing hash data 835, as described in process 1500.

Subsequent step 1513 may then identify areas of the serialized key-value tuple container that contain no longer use data, like areas containing overwritten or removed key-value tuples, or areas containing no longer required key hash data 835. To identify invalidated key-value tuples, step 1513 may follow hash offsets and collision lists of hash slots that were occupied before modification (as described in the version key hash data 835 from before the modification started), and hash slots that are occupied after modification (as described in the new key hash data) and identify those key-value pairs that are marked as invalid by their validity indicator 1011. In addition, step 1513 may identify location and size of the original key hash data if it was not overwritten by the new key hash data. If the original key hash data was overwritten by the new one, step 1513 may determine the position representing the end of the new key hash data and the position representing the end of the original key has data as to be invalidated memory area.

Following step 1514 may then overwrite the memory areas identified by step 1513 with homogeneous values, like null values.

The process then ends with step 1515.

The rewriting finalization process 1520 starts with step 1521, when a modified serialized key-value tuple container is available for finalization and rewriting finalization is requested.

Following step 1522 may create a new, empty output buffer into which the serialized key-value tuple container should be written.

Afterwards, step 1523 may append header and control data for the record to the output buffer, like validity indicator 800, byte size 801- and type 802 encoding data, and place holder values for size data and key hash data offset value storage.

Following step 1524 may iterate over the expanded hash data 1101, to identify occupied hash slots 1103 in the expanded hash data, and subsequent step 1525 may then, for each identified occupied hash slot, identify key-value tuples addressed by the offsets stored in the hash slots, and also identified in collision lists of those hash slots, that are not marked as invalid, and append those key-value tuples to the output buffer. Step 1525 may also update offsets stored in occupied hash slots 1103 and collision offsets 1021 of appended key-value tuples to correct values pointing to offset positions in the output buffer.

Afterwards, step 1526 may determine the value for offset value for the key hash data, e.g., as the value of a write pointer maintaining the number of bytes written to the output buffer, and store this offset value as new key hash data offset 832.

Subsequent step 1526 may compress the expanded hash data 1101 to create compressed key hash data 835 and append it to the output buffer.

Following step may then determine size data for the new written serialized key-value tuple container, e.g., as the value of the write pointer for the output buffer after the key hash data 835 was appended and store it as size data 803 of the new written serialized key-value tuple container. The process then ends with step 1529.

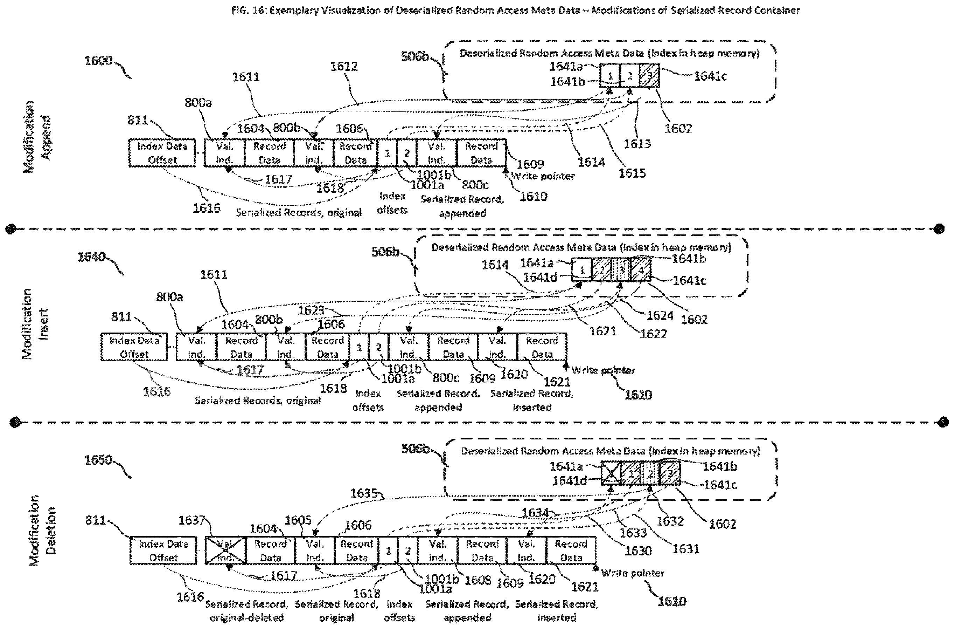

Coming now to FIG. 16, which visually describes updates performed to serialized record container 210a, which is directed to store sequences of other serialized records 210. The upper section 1600 of FIG. 16 shows a serialized record container after it was prepared for modification and after a new serialized record was appended to it, the middle section 1640 shows the same serialized record container after also a new serialized record was inserted at an intermediate position, and the lower section 1650 of FIG. 16 shows the serialized record container after a serialized record was removed from it.

Preparing the serialized record container for modification includes the creation of expanded random access meta data 506b, which includes the creation of an offset array 1602, and copying 1614 and 1615 offsets 1001a and 1001b stored in the element index 815 of the serialized record container to corresponding elements 1641a and 1641b of the offset array. The sequence of offsets in the element index (e.g., 1001a before 1001b) is retained in the offset array 1602 (e.g., 1641a before 1641b). Creation of the offset array may also include reading the index data offset 811 to locate the element index 815 and determining the number of index offset elements 1001 contained in the index may include reading the element count 812 of the serialized record container. Creating the offset array with a size according to the element count, and reading index offset elements 1001 form the element index and copying them to the offset array may also be based on the element count value. The offset array may be created with a size that exceeds the element count, to have e.g., double the size of the element count, to already reserve storage space required for additional offset elements created by future modifications.

After modification preparation is finished, both offsets stored in the offset array and offsets stored in the element index point to the same serialized records, e.g., offset 1001a and 161a point 1617 and 1611 to the validity indicator 800a of serialized record 1604 and offset 1001b and 1641b point 1618 and 1612 to the validity indicator 800b of serialized record 1606. The to be modified serialized record container is copied to a continuous memory area, and a write pointer 1610 may be maintained which points to the end position of the serialized record container in the continuous memory area.

A first append modification of the serialized record container may append validity indicator 800c of serialized record 1609 to the continuous memory area and append third offset element 1641c to the offset array 1602. The value of offset element 1641c may set to point 1613 to the start position of the appended serialized record. This value of the write pointer before offset value may be set to the value of the write pointer 1610 before the new serialized records was appended to the continuous memory area.

An insert of a new serialized record into the serialized record container is shown in the middle section 1640 of FIG. 16. In this case, serialized record 1621, including its validity indicator 1620 are inserted into the serialized record container on (logical) position 2, by appending validity indicator 1620 and serialized record 1621 to the continuous memory area containing the serialized record container, inserting a new offset element 1641d at the second position of the offset array 1602, between offset element 1641a and 1641b, and setting the value of the new offset element 1641d to point 1621 to the start position of the inserted serialized record, e.g. by setting it to the value of the write pointer 1610, before the new serialized record was added.

This way, the sequence of serialized records stored in the continuous memory area, which is first serialized record 1604, then 1606, 1609 and 1621, is different from the sequence in which they are referred in the offset array 1602, which also starts with 1604 but then deviates to 1621 followed by 1606 and 1609.

The deletion of a serialized record from the serialized record container is visualized in section 1650 of FIG. 16, where the first serialized record 1604 may be removed. Removal may be performed by setting the validity indicator 1637 of the to be removed serialized record to indicate invalidity, and by removing the offset element 1641a referring to the to be removed serialized record from the offset array 1602. Otherwise, the serialized record container as stored in the continuous memory area, including the value of the write pointer 1610 and the deserialized access meta data 506b remains unchanged.

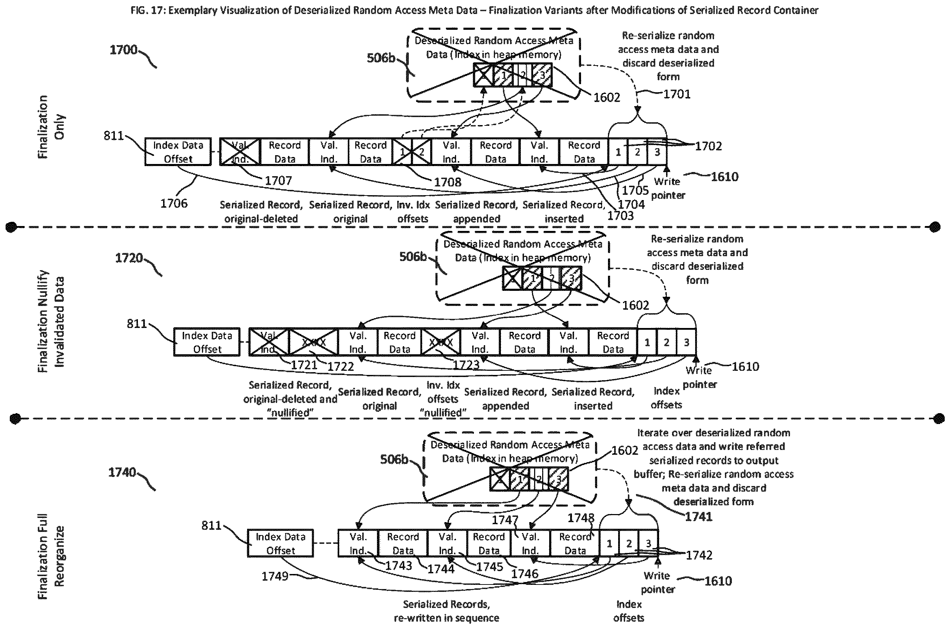

Referring now to FIG. 17, which displays different finalization variants of serialized record containers after modification is finished. The upper section 1700 visualizes a basic finalization, which only appends random access data to the continuous memory area containing the serialized record container and updates meta data for the serialized record container, like new location of random access data, number of contained serialized records after modification, and size of the serialized record container.

An advanced finalization variant, which in addition overwrites portions of the continuous memory area that contain invalidated/no longer used data with homogeneous values is shown in section 1720 of FIG. 17, and a finalization variant performing a rewrite of the modified serialized record container is shown in section 1740.

The finalization variants are explained on the modification state of a serialized record container shown in section 1650 of FIG. 16.

In the basic finalization variant shown in 1700, the offsets stored in the offset array 1602 after modification (i.e., remaining offsets 1641d, 1641b and 1641c), are appended 1701 to the continuous memory area as they appear in the offset array 1701. The index data offset 811 is updated to point 1706 to the location of the new element index, size information 803 is updated to the size of the serialized record container after appending the new element index 815, and the element count 812 may be set to the number of elements in the new element index. The value of the write pointer 1610 before appending the new element index to the serialized record container may be used as value for the index data offset and the value of the write pointer after appending the new element index may be used as value for the size information 803.

The finalization variant shown in section 1720, also identifies and overwrites portions of the continuous memory area of the serialized record container that contain invalidated or no longer used data in addition to the basic finalization operations. This finalization variant may use a separate offset array to collect offsets of deleted or overwritten serialized containers and iterate over this separate list of offsets to identify memory areas containing those serialized records and overwriting those memory areas with homogenous bit sequences, like 0 values. In the concrete example, memory areas storing deleted serialized record 1604 and its validity indicator 1637 may be identified and overwritten. In addition, the finalization process may identify and overwrite storage location of the original element index that existed before the modification. To identify this storage location, the finalization process may use the element index offset 811 that was present in the serialized record container before the modification was started to identify the start position of the memory area, and then multiply the index pointer size 1000 with the original element count 812 value, as it was before the modification, to determine the size of the memory area used by the original element index. In the concrete displayed example, the finalization process may overwrite memory areas 1721 and 1722 for the removed serialized record, and memory area 1723 for the no longer used original element index.

The finalization variant shown in section 1740 may create a new continuous memory area for the finalized serialized record container, and first append header data, like validity indicator, size- and type encoding data, including placeholder values for header data that is only available after the finalization, like element count, size information and index data offset to the new continuous memory area. Afterwards, it may iterate over offsets stored in the offset array 1602, as they appear in the array, and copy serialized records referred by those offsets from the continuous memory area used for modification of the serialized record container to the continuous memory area used for the finalization. This leads to a finalization variant of the serialized record container in which serialized records are stored and appear in the same "logical" sequence, as they have in the element index. After all serialized records are written, the index offsets contained in the index array 1602 may be appended to the new consecutive memory area in the order as they appear in the index array, and element index offset 811, element count 812 and size data 803 may be updated in the new consecutive memory area as last step of the finalization process. In the concrete depicted example, the finalization process will first write serialized records 1744, 1746 and 1748 (including their validity indicators 1743, 1745 and 1747) to the new consecutive memory area, then append 1741 the element index values 1742 as they are after the modification to the new consecutive memory area. The finalization process may then also update the index data offset 811 to point 1749 to the new element index 815, and other meta- and header data stored in the new consecutive memory area, like element count 812 or size data 803 to contain correct values.

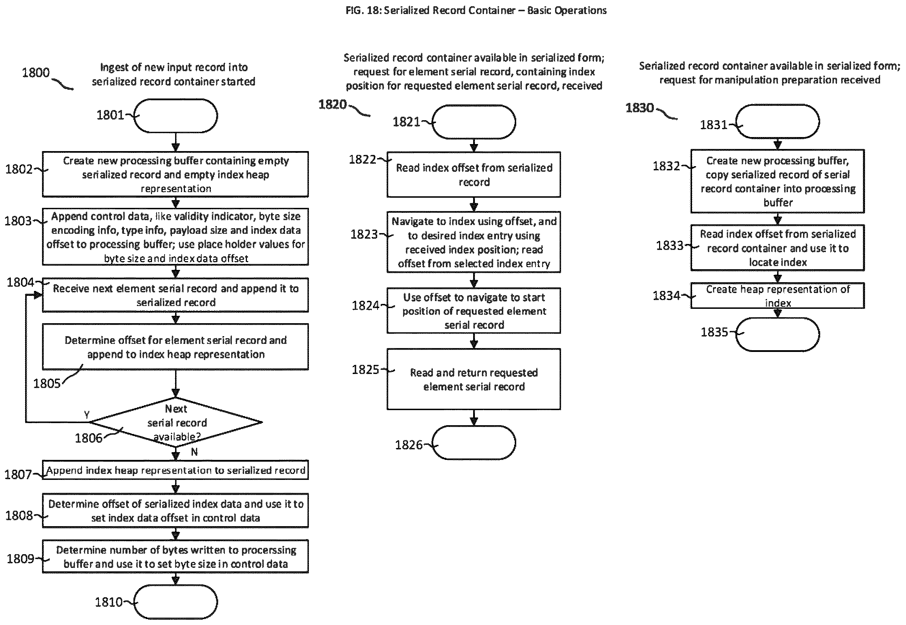

Referring now to FIG. 18, which provides flow charts of basic operations that are performed on serialized record containers, like the creation of new serialized record containers from ingested input data, the access of a specific serialized record contained in a serialized record container, and the preparation of a serialized record container for its modification.

Process 1800 describes the creation of a new serialized record container 210a from one or more ingested input records 102 according to one or more conversion rules 203.

The process starts with step 1801, when a new input record 102 is available for ingest. Following step 1802 may create a new processing buffer (i.e., a new continuous memory area), and an empty storage space for expanded random access meta data 506, including the creation of an offset array 1602 of a specific starting size (i.e., 10, 16 or 32 elements).

Step 1803 may then append control and header data, like validity indicator, size- and type encoding data, and other meta data, including placeholder data for values than can only be determined after ingestion is finished, to the processing buffer.

Following step 1804 may then analyze a portion of the received input record to create a next serialized record that should be added to the new serialized record container. Step 1804 may e.g., apply one or more ingest rules 203 to the received input record to create the serialized record. Afterwards, step 1805 may determine an offset value for the new serialized record, e.g., by using the value of a write pointer pointing to the last written position of the processing buffer, before the new serialized record was appended to the buffer.

Subsequent decision step 1806 may then determine whether a next serialized record is available. Step 1806 may e.g., check whether the complete received input record is already processes, which may indicate that no further serialized record can be expected. In this case, the process continues with step 1807 to close and finalize the serialized record container, otherwise it continues with step 1804 to process the next serialized record.

Step 1807 may append the content of the offset array 1602 to the processing buffer as element index, following step 1808 may then update the element index offset 811 to point to the element index, and step 1809 may then determine the size of the finished serialized record container and update its size date 803 accordingly. Step 1809 may in addition determine and set the element count 812. The process then ends with step 1810.

The access of a specific serialized record contained in a serialized record container is described in flow chart 1820. The process starts with step 1821, when a serialized record container 210a is available in serialized form (no preparation for manipulation is required), and a request to read a specific contained serialized record, containing an index value of the desired serialized record is received.

Following step 1823 may then read the element index offset 811, to locate the element index, and then use the received index value to identify and read the offset stored in index offset entry addressed by the received index.

Step 1824 may then use the read offset value to navigate to the start position of the desired serialized record, and subsequent step 1825 may read and return the desired serialized record. The process then ends with step 1826.

The preparation of a serialized record container 210a for manipulation is shown in flow chart 1830. The process starts with step 1831, when a serialized record container is available, for which manipulation preparation was requested. Following step 1832 may create a new processing buffer (i.e., continuous memory area) for modification activities and copy the serialized record container into this processing buffer. A write pointer for the processing buffer may be maintained and initialized to point to the end position of the serialize record container in the processing buffer.

Afterwards, step 1833 may be executed, which first reads the element index offset 821, to locate the starting position of the element index 815 of the serialized record container. Step 1834 may then read the index offsets 1001 contained in the index and copy them to a heap representation of the index, e.g., in form of an index array 1602. The process then ends with step 1835.

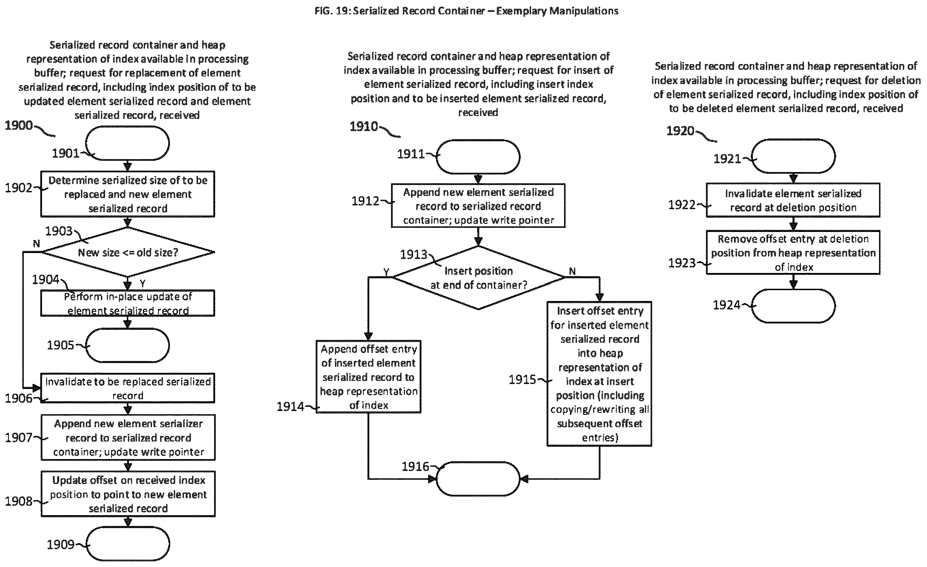

Coming now to FIG. 19, which provides flow charts of exemplary manipulation operations performed on serialized record containers 210a. Flow chart 1900 describes the process to update a serialized record contained in a serialized record container, flow chart 1910 the insert of a new serialized record into a serialized record container, and flow chart 1920 the deletion of a serialized record from a serialized record container.

The process 1900 of updating a serialized record contained in a serialized record container starts with step 1901, when a serialized record container is available and prepared for modification (as performed by process 1830), and a request to update a specific serialized record, including the new value of the serialized record, and the index of the to be updated serialized record is received. Position of the to be updated serialized record may already be determined, as described in process 1820.

Following step 1902 may then determine the serialized size of the currently stored serialized record and of the received replacement record. Step 1902 may e.g., read size data 803 of both records. Step 1902 may first read and interpret byte size encoding information 801 from stored and replacement record, and then use the byte size encoding information to identify and interpret byte size information data 803 of both records to determine the byte size of those records. Subsequent decision step 1903 may then compare the byte size 803 of the currently stored, to be replaced, serialized record with the byte size 803 of the replacement record, and in case the size of the replacement record is smaller than or equal to the size of the currently stored serialized record, continue with step 1904, which performs an in-place update, by overwriting the currently stored serialized record with the received new one. The process then ends with step 1905.

If otherwise the size of the replacement record exceeds the size of the currently stored record, step 1906 is executed, which invalidates the currently stored serialized record, e.g., by setting its validity indicator 800 to indicate an invalid record, followed by step 1907, which appends the received serialized record to the serialized record container, and by step 1908, which updates the heap representation of the element index by setting the offset value stored at the received index position to the offset of the appended new serialized record. The process then ends with step 1909.

The insertion of a new serialized record into a serialized record container is described in flow chart 1910. Also here, a serialized record container is available and already prepared for modification, and a request to insert a new serialized record, containing the new serialized record, and an insert position is received in step 1911.

Following step 1912 may append the received serialized record to the serialized record container (i.e., by appending it to a continuous memory area containing the serialized record container), and subsequent decision step 1913 may determine whether the (logical) insert position is at the end of the container (i.e., received insert position equal or greater than number of elements 1641 contained in the offset array 1602). In case the (logical) insert position is at the end of the container, step 1914 is executed which appends a new offset element 1641 to the office array 1602 (the heap representation of the element index 815).

If otherwise the insert position is not at the end of the index, step 1915 is executed, which may first copy elements 1641 already contained in the offset array that are located at an index position equal or higher than the insert position to the respective next higher position in the offset array, and then write the offset for the appended serialized record to the position of the offset array indicated by the received insert index position.

The process ends with step 1916 after step 1914 or 1915.

The process of deleting a serialized record from a serialized record container 210a is shown in flow chart 1920.

The process starts with step 1921, when a serialized record container is available, and a request to delete a specific serialized record, containing the index position of the to-be-deleted record is received.

Following step 1922 may use the received index to identify and read the offset element 1641 of the offset array 1602, to retrieve the offset of the to-be-deleted record, and then navigate to this record and invalidate it, e.g., by setting the validity indicator 800 of the record to indicate its invalidity. In case the to be deleted element is a key-value tuple 820, step 1922 may set the validity indicator 1011 of the tuple control data 821 of the to be deleted key-value tuple to indicate its invalidity. Afterwards, step 1923 may remove the offset element 1641 for the deleted record from the offset array.

The process then ends with step 1924.

It is noteworthy that invalidation operations of elements contained in serialized record containers, or serialized key-value tuple containers, as described above, always include the removal of offsets or references to the invalidated element form random access meta data (i.e., hash data or index data), and the separate invalidation of the element, by setting a validity indicator (i.e., validity indicator of serialized record 800 or validity indicator 1011 of key-value tuple 820) of the removed element to indicate its invalidity.

By performing both actions, correct and consistent access is possible both via the random access meta data, and via sequential iteration of the elements of a container record as they appear in the serialized form.

Explicit marking of invalidated elements, by setting a validity flag contained in the invalidated elements may be omitted if sequential iteration over container records is not required.

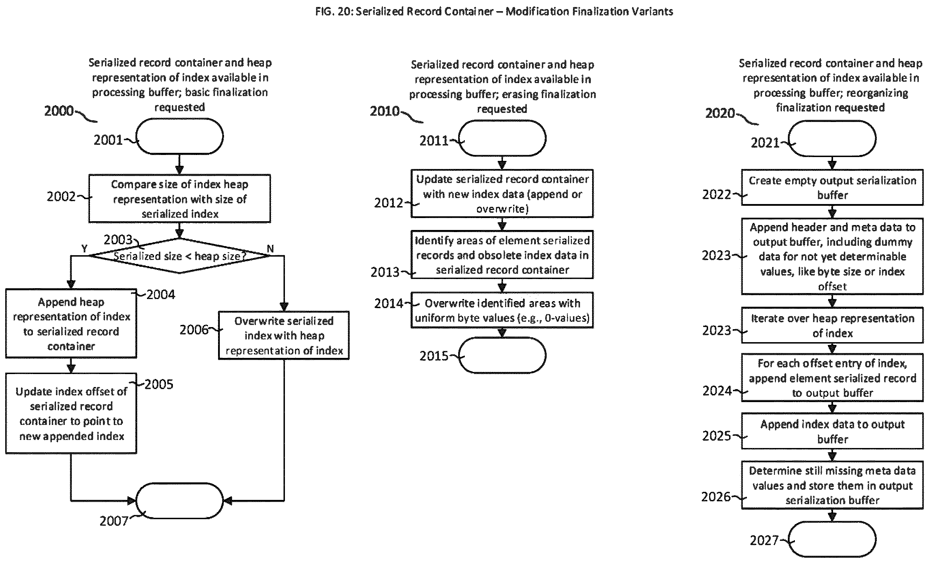

Coming now to FIG. 20, which describes different finalization variants for serialized record containers after finished manipulations.

Basic finalization, which appends the heap representation of index data to the serialized record container and updates the index offset to point to the new appended index data is shown in flow chart 2000, an advanced finalization variant, which also identifies and overwrites invalidated/no longer used areas of the serialized record container with homogeneous values is described in flow chart 2010, and a finalization variant which performs a rewrite of the modified serialized record container, thereby omitting invalidated/no longer used memory areas is described in flow chart 2020.

The basic finalization process 2000, starts with step 2001, when a modified serialized record container is available, modification activities are finished, and the serialized record container and heap representation of random access meta data of the serialized record container, e.g., in form of an offset array 1602 is also available.

Following step 2002 may then determine the memory size of the element index 815 as it is currently stored in the serialized record container, with the memory size of its heap representation. If the size of the currently serialized element index is smaller than the size of its heap representation, decision step 2003 may continue the process with steps 2004 and 2005, which append the heap representation of the element index to the serialized record container and then update the element index offset 811 to point to the new appended element index 815. If otherwise the size of the heap representation of the index is smaller than the serialized index, the process continues with step 2006, which overwrites the serialized index with the heap representation of the index after the performed updates. After step 2005 or 2006, the process ends with step 2007.

The advanced finalization process, which in addition to basic finalization, also identifies memory areas of the serialized record container which contain invalidated or no longer used data and overwrites those memory areas with homogenous data is described in flow chart 2010.

The process starts with step 2011, when a serialized record container for finalization is available, and performs basic finalization in step 2012, as described in flow chart 2000. Following step 2013 may then identify invalidated or no longer used elements of the serialized record container and overwrite them. Step 2013 may e.g., use values of element index offset 811 and element count of the serialized record container as they were before finalization to identify location and size of the original element index. To identify invalidated elements, step 2013 may compare the element index as it was before the modification started with the element index as it is after the modification, to identify offsets that are contained in the element index before modification, but that are not contained in the element index after modification. The so identified offsets may be used to locate invalidated serialized records.

Following step 2014 may then overwrite the memory areas identified by step 2013 with uniform values, like 0-values. The process then ends with step 2015.

The finalization variant the rewrites a modified serialized record container after modification activities are finished is shown in flow chart 2020.

The process 2020 starts with step 2021, when a modified serialized record container 210a is available for finalization, and rewriting finalization is requested. Following step 2022 may create an empty output buffer (empty continuous memory area) for the to be finalized serialized record container, and subsequent step 2023 may then append header and meta data for the serialized record container, like validity indicator, size- and type encoding data, and placeholder values for meta data that is not available before finalization is performed, like size information and index data offset.

Step 2023 may then iterate over the heap representation of the index (i.e., the offset array 1602), and step 2024 may then, for each element of the index, select the serialized record identified by the index element in the modification buffer (continuous memory area into which the serialized record container was copied before manipulation and in which all appends to the serialized record caused by manipulation activities were performed), and then append the selected serialized records to the output buffer. After a serialized record was appended to the output buffer, the offset value of the index element for the serialized record may be updated to point to the offset of the serialized record in the output buffer. After steps 2023 and 2024 are finished, all serialized records contained in the modification buffer that are still valid (because they are referred by the heap representation of the index), are appended to the finalization buffer, and the index elements of the heap index point to the offsets of the serialized records in the finalization buffer.

Following step 2025 then appends the heap representation of the index (i.e., content of the offset array 1602) to the finalization buffer, and subsequent step 2026 may determine values for meta data that can only be determined after finalization, like element index offset 811, or size data 803 and updates those values in the header data of the serialized record container in the finalization buffer. The process then ends with step 2027.

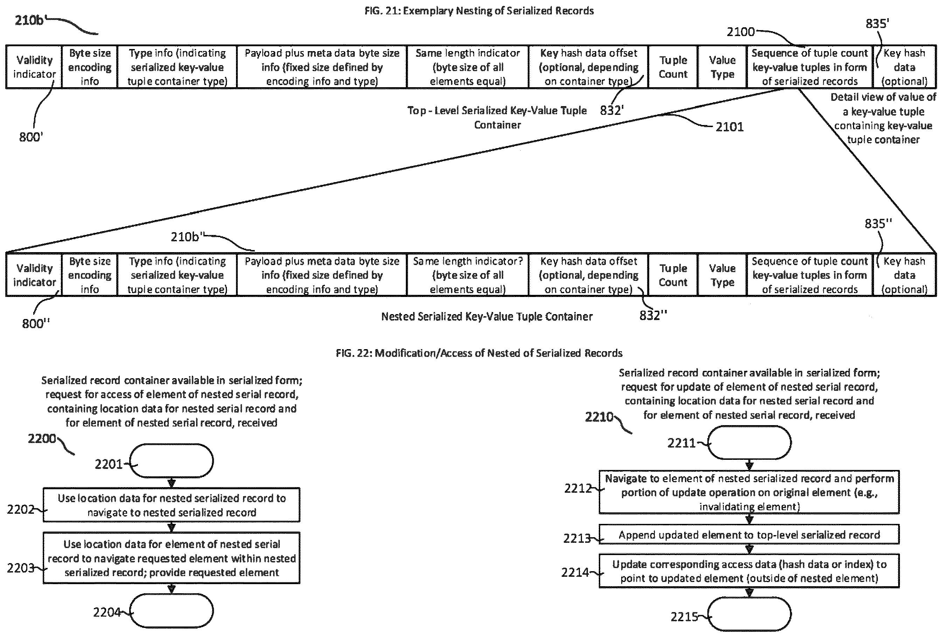

Coming now to FIG. 21, which conceptually describes hierarchical serialized records, like serialized key-value tuple containers where one or more values of contained key-value tuples are again serialized key-value containers or serialized record containers.

A top-level serialized key-value tuple container 210b' may contain a sequence 2100 of key-value tuples 820 as part of its payload data. The value 823 of one of those key value tuples 820 may again be a serialized key-value tuple container 210b", which is nested 2101 into the top-level key-value tuple container, and which again contains key-value tuples 820.

Offsets stored in nested serialized records, like element index offsets 811, key hash data offsets 832, index offsets 1001, hash offsets 1004, or colliding key offsets 1021, are always calculated relatively to the starting position of the nested serialized record. In the example shown in FIG. 21, this means that key hash data offset 832' of serialized key-value tuple container 210b' is calculated using the start position (start position of validity indicator 800') of the top-level serialized key-value tuple container 210b', whereas the key hash data offset 832" of the nested serialized key-value tuple container 210b" is calculated using the start position of the nested serialized key-value tuple container 210b" (start position of validity indicator 800") as basis.

Coming now to FIG. 22, which provides flow charts of exemplary access and modification operations on nested serialized record containers or serialized key-value tuple containers.

Flow chart 2200 describes the access of elements of a nested serialized container (i.e., a serialized record container 210a, or a serialized key-value tuple container 210b). The process starts with step 2201, when a top-level serialized container, containing a nested serialized container is available, and a request to access an element of the nested serialized container is received, where the request contains location data (i.e., value of a key for a serialized key-value tuple containers, or index value for a serialized record container) for the nested serialized container, and location data for the element of the nested serialized container.

Following step 2202 may then use the location data for the top-level container to navigate to the location of the nested serialized container, and subsequent step 2203 may then use the location data for the addressed element of the nested serialized container to navigate to this element, read it and provide it to the sender of the received request. The process then ends with step 2204.

Flow chart 2210 conceptually describes the update of an element of an element of a nested serialized container. The process starts with step 2201, when a top-level serialized container, containing a nested serialized container, is available and prepared for modification, and a request to update an element of the nested serialized container is received, where the received request contains location data for the nested serialized container, location data for the element of the nested serialized container that should be updated, and the new value for of the element.

Following step 2212 uses received location data to first navigate to the nested serialized container and to the element of the nested serialized container that needs to be updated and performs update operations required on the original element. Step 2212 may, e.g. set an validity indicator of the original element to indicate its invalidity.

Following step 2213 may then append the new element to the top-level serialized record (i.e., to the continuous memory area containing the top-level serialized container and all its nested serialized containers), and step 2214 may then update random access meta data for the updated element of the nested serialized container to point to the appended, new value of the updated element. The process then ends with step 2215.

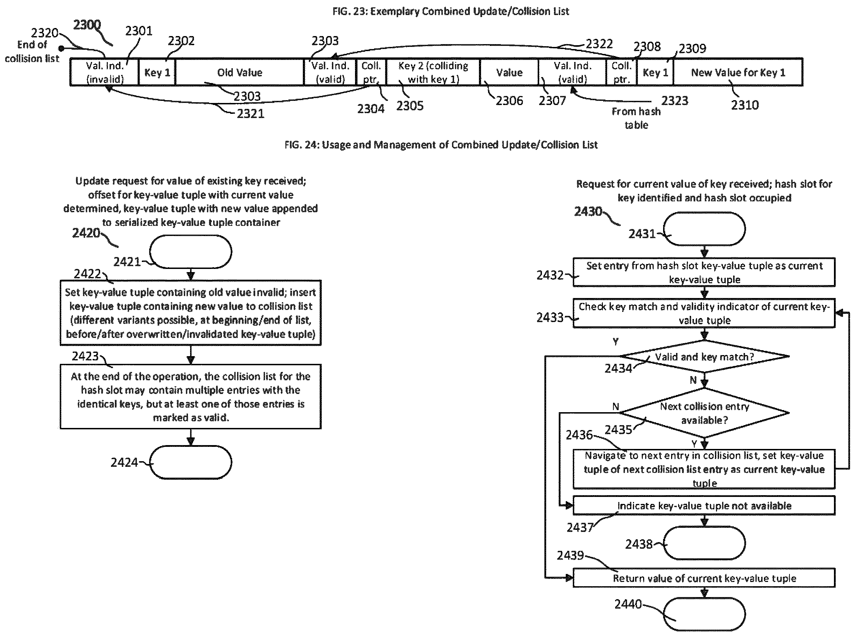

Coming now to FIG. 23, which shows the combined management of hash collisions and value updates for serialized key-value tuple containers by an example.

An exemplary collision/update list 2300 may have been created by a first key-value tuple, represented by validity indicator 2301, key 1 2302 and (old) value 2302. This first key-value tuple may have been available before the serialized key-value tuple container was edited, and no collision may exist for the key 2302 of this key-value tuple before editing started, therefore also no collision offset is stored for the first key-value tuple. In this situation, the first key-value tuple is referred from the hash table.

In a first editing step, a second key-value tuple, represented by validity indicator 2303, collision pointer 2304, key 2 2302 and value 2306 may have been added. Key 1 may collide with key 2, therefore a collision pointer 2304 is added to the second tuple, which points 2321 to the first tuple. The pointer from the hash table is changed to point to the second tuple, which is now the first element of the collision list.

An update operation of the value 2302 of the first tuple, lead to the append of a new version of the first tuple, represented by validity indicator 2307, collision pointer 2308, key 1 2309 and new value 2310. The validity indicator 2301 of the first variant of the first tuple is set to indicate an invalid tuple, the collision pointer 2308 is set to address the second tuple, and the offset from the hash table is set to point to the second version of the first tuple.

The so created collision list contains both still valid tuples (second tuple with key 2 2305, second version of first tuple with key 1 2309) and invalid tuples (first version of tuple with key 1 2302). Writing collision offsets only to appended tuples, after a collision occurred, and then changing the offset from the hash table to the new appended tuple assures that storage space for collision offset data is only required when a collision actually occurs, and that managing of collisions (and updates of values of key-value tuples) does not require the update of already written/serialized key-value tuples, or the shifting/copying of whole sequences of key-value tuples to create space for a collision offset.

Coming now to FIG. 24, which provides flow charts that conceptually describe how an update/collision list is updated due to the update of a value of a key-value tuple contained in the update/collision list, and how a request for a value of a key-value tuple is processed using the update/collision list.

The process of updating update/collision list on an update of a value of a key-value tuple is shown in flow chart 2420, and starts with step 2421, when a new version of a key-value tuple, replacing an old one was appended to a serialized key-value tuple container, and an update to the update/collision list is required. Following step 2422 may set the key-value tuple containing the original value as invalid, and add the key-value tuple containing the new value for the tuple to the collision list. Step 2422 may also update the offset from the hash table for the hash slot of the collision list to point to the new version of the key-value tuple, which is now the entry to the collision list.

At the end of the operation, the update/collision list may contain multiple entries with the same key, but only one of those entries is marked as valid, as stated in step 2423.

The process then ends with step 2424.

The process of fetching the value of for a specific key, using an update/collision list is shown in flow chart 2430.

The process starts with step 2431, when a request for the value assigned to a specific key is received, and the hash slot for the key is already identified.

Following step 2432 may then set the key-value tuple identified by the hash slot (i.e., the key-value tuple located at the offset stored in the hash offset entry 1004 of the hash slot) as current key-value tuple, and subsequent step 2433 may check whether the key stored in the current key-value tuple matches the received key and if the current key-value tuple is valid (value not overwritten). If the keys match, and the key-value tuple is valid, decision step 2434 continues the process with step 2439, which returns the value of the current key-value tuple. The process then ends with step 2440.

If otherwise the keys do not match, or the current key-value tuple is not valid, the process continues with decision step 2435, which determines whether a next entry is available in the collision list (i.e., collision indicator flag 1012 set, and collision offset 1021 available for current key-value tuple).

If a next colliding entry is available, step 2436 is executed, which navigates to the next colliding entry, sets it as current key-value tuple and then continues with step 2433.

If otherwise no next colliding entry is available, decisions step 2435 continues the process with step 2437, which indicates that the requested value is not available. The process then ends with step 2438.

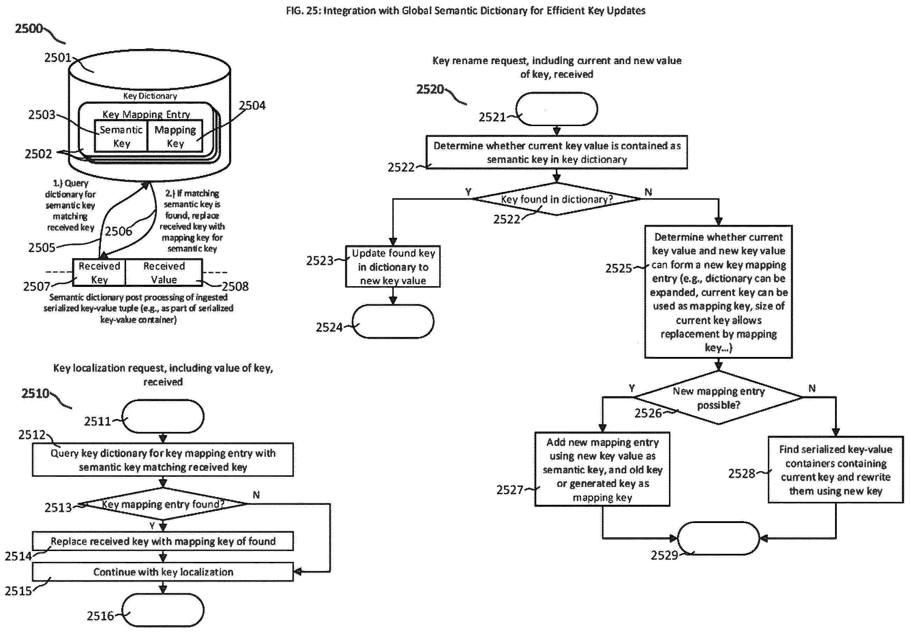

Coming now to FIGs. 25 to 27, which describe the usage of key-dictionaries with serialized key-value tuple containers, to align received keys with internal, semantic-assigned keys, to support bulk-update of keys, and to reduce storage space required for keys.

FIG. 25 contains a block diagram 2500 showing a global key-dictionary which may be used on ingest of keys to replace received keys with mapping references to entries in the dictionary, and flow charts describing the localization of keys, and the bulk update of keys using the global key-dictionary.

Block diagram 2500 contains a key-dictionary 2501, which stores multiple key mapping entries 2502, where each key mapping entry may contain a semantic key 2503 and a mapping key 2504, where the semantic key is related to a specific meaning of the key, and the mapping key represents an identifier for the key.

During ingest of key-value tuple data, on receipt of a key 2507 for a value 2508, the ingest process may query 2505 the global dictionary 2501 if a key mapping entry 2502 with a semantic key matching the received key is available. Querying may be based on key equality, but it may also use mapping rules, an example of such mapping rules may map ingested keys like "network address", "host address" or the like to an internal semantic key "host".

If a matching key mapping entry is found, the received key 2507 is changed to the mapping key 2504 of the key mapping entry.

The resolution of a key, by using the global dictionary, is shown in flow chart 2510. The process starts with step 2511, when a request containing a key (e.g., a request for a value of a key-value tuple, containing the key of the tuple) is received. Following step 2512 queries the global dictionary for a key-mapping entry 2502 with a semantic key 2503 matching the received key. If a matching entry is found, the received key is changed to the mapping key 2504 of the found key mapping entry in step 2514, key localization continues with the mapping key in step 2515 and the process ends with step 2516. If otherwise no matching key mapping entry is found, key localization 2515 uses the received key.

The update of a key contained in the dictionary is shown in flow chart 2520. The process starts with step 2521, when a request for global update of a key, containing the current value of the key and the new value of the key is received.

Following step 2522 may then query the dictionary 2501 if a key mapping entry with the current key is available. If such an entry is available, the process continues with step 2523, which updates the semantic key 2503 of the found key mapping entry 2502 to the new key value. The process then ends with step. If otherwise the received current key is not found in the dictionary, the process continues with step 2525, which determines whether the dictionary 2501 can be expanded with a new key mapping entry 2502 containing the new key value as semantic key and the old key value as mapping key. It may depend on architecture and configuration of the pipeline system processing the ingested monitoring data and of the monitoring system processing the data if an extension of the dictionary is possible. If adding a new mapping is possible, the process continues with step 2527, which added the new key mapping entry, which maps the new key value to the old value to the dictionary 2501. If otherwise expanding the dictionary is not possible, step 2528 is executed, which may identify serialized key-value tuple containers containing tuples with a key matching the received old key value and rewrites them using the new key value for those tuples.

After step 2527 or 2528, the process ends with step 2529.

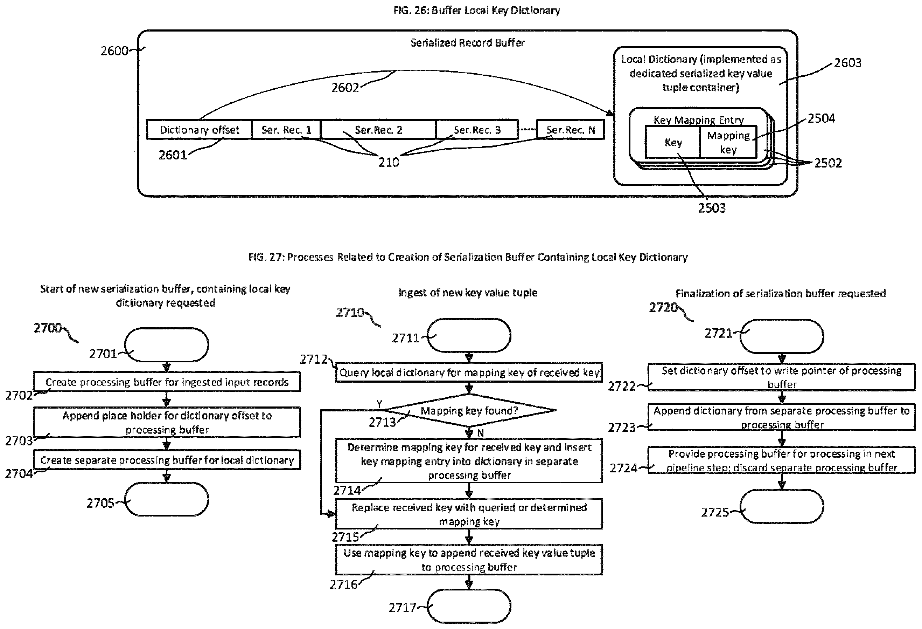

Coming now to FIG. 26, which depicts a serialized record buffer containing a local dictionary, 2603, which also contains key mapping entries 2502 that map keys 2503 to mapping keys 2502. In this case, the dictionary 2603 is created during ingest of input data for the creation of one serialized record buffer, the dictionary is stored as component of the serialized record buffer 2600 and is also only valid for the serialized record buffer which contains it.

Such a serialized record buffer 2600 may start with a dictionary offset 2601, pointing 2601 to the location of the local dictionary 2603, which may be stored at the end of the serialized record buffer, followed by a sequence of serialized records 210, containing one or more serialized key-value tuple containers.

Coming now to FIG. 27, which provides flow charts for the creation of a serialization buffer supporting a local dictionary, the ingest of a key-value tuple including an optional update of the local dictionary, and the finalization of the serialization buffer, to store the local dictionary in the buffer.

Flow chart 2700 describe the creation of a new serialization buffer with local dictionary support 2600, and starts with step 2701, when a new serialization buffer is requested. Following step 2702 may create an ingestion processing buffer, to which ingested serialized records are appended, and subsequent step 2703 may then append a place holder value for the dictionary offset 2601 to the buffer. Next, step 2704 may create a separate processing buffer to store the local dictionary. 2603. Afterwards, the serialization buffer is ready to receive and store serialized records 210. The process then ends with step 2705.

The ingest of new key-value tuples into the serialization buffer, including update and usage of the local dictionary is shown in flow chart 2710.

The process starts with step 2711, when a new key-value tuple was created and is ready to be appended to the processing buffer. Following step 2712 may then query the local dictionary (which is at this time stored in the separate processing buffer), to determine if a mapping entry for the key of the ingested key-value tuple is already contained in the local dictionary 2603.

If such a mapping entry 2502 is already available in the local dictionary, the process continues with step 2715.

If otherwise no matching mapping entry 2502 is available, step 2714 may be executed, which determines a mapping key for the received key (i.e., a hash value, or other numeric value derived from the received key) and adds a new key mapping entry 2502 to the local dictionary.

Step 2715 then replaces the received key with the mapping key that was either retrieved in step 2712 or created in step 2714, and the process continues with step 2716, which appends the received key-value tuple using the mapping key instead of the received key. The process then ends with step 2717.

The finalization of a processing buffer 2600, e.g., after it reaches a specific size, contains a specific number of serialized records, or a specific time has elapsed since its creation, is shown in flow chart 2720. The process starts with step 2721, when the finalization of the processing buffer is requested, and continues with step 2722, which sets the dictionary offset 2601 to the correct value, e.g. to the value of a write pointer which indicates the current size of the processing buffer. Afterwards, step 2723 may be executed, which appends the local dictionary, which was stored and maintained in a separate processing buffer, to the serialized record buffer 2600. The local dictionary may be maintained and stored in form of a serialized key-value tuple container 210b, where contained key-value tuples 820 represent key-mapping entries 2502.

Following step 2724 may then provide the finalized serialized record buffer for subsequent processing steps and discard the separate processing buffer. The process then ends with step 2725.

Operations to locate keys, or for the global update of keys, as described in flow chars 2510 and 2520 for the global dictionary case, may also be applied to serialized record buffers 2600 containing local dictionaries. However, in this case, key updates are only performed within individual serialized record buffers.

The techniques described herein may be implemented by one or more computer programs executed by one or more processors. The computer programs include processor-executable instructions that are stored on a nontransitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for ingesting data records, comprising:
- receiving a plurality of serialized data records;
- formatting a serialized record container in a first memory space;
- for each serialized data record in the plurality of serialized data records, appending a given serialized data record to an end of the serialized record container, determining an offset value for the given serialized data record, and updating a record index with the offset value for the given serialized data record, where the record index is an array of offset values and each offset value in the array of offset values indicates a distance to beginning of a serialized data record in the serialized record container;
- appending the record index to an end of the serialized record container;
- determining a location of the record index in the serialized record container; and
- updating an index offset in the serialized record container with the location of the record index, where the index offset indicates a distance to beginning of the record index in the serialized record container,
wherein:
- the serialized record container includes a size field indicating size of the serialized record container and further comprises determining size of the serialized record container after the step of appending the record index and updating the size field with the determined size of the serialized record container,
- formatting the serialized record container includes allocating a second memory space for the record index, where the second memory space differs from the first memory space,
- the index offset and the size field are located within the serialized record container before a first serialized data record,
- the record index defines a sequence of serialized data records contained in the serialized record container which is independent from the storage sequence of the serialized data records within the serialized record container.

2. The method of claim 1, wherein formatting the serialized record container includes updating a validity indicator indicating whether data in the serialized record container is valid, and updating a type indicator field indicating the type of data stored in the serialized record container.

3. The method of claim 1 or 2, wherein each of the serialized data records in the plurality of serialized data records includes a validity indicator indicating whether data in a particular serialized data record is valid, a type indicator field indicating the type of data stored in the particular serialized data record, a size field indicating size of the particular serialized data record, an encoding field, where the encoding field indicates how data in size field is encoded in the particular serialized data record, and payload area.

4. The method of claim 3 further comprises compressing the serialized record container prior to storing the serialized record container

5. The method of any one of the preceding claims, wherein:
- wherein each of the serialized data records in the plurality of serialized data records is defined as a key-value tuple and includes a key that uniquely identifies a given serialized data record within the plurality of serialized records;
- formatting the serialized record container as a serialized tuple container in a first memory space;
- for each serialized data record in the plurality of serialized data records, appending a given serialized data record to an end of the serialized tuple container, calculating a hash value for the key of the given serialized data record, determining a given slot of a hash structure using the hash value, and updating the given slot of the hash structure with an offset value, where the hash structure is an array of offset values and each offset value in the array of offset values indicates a distance to beginning of a serialized data record in the serialized tuple container;
- appending the record index in form of the hash structure to an end of the serialized tuple container.

6. The method of claim 5, wherein appending the hash structure further comprises compressing the hash structure by only storing updated slots of the hash structure at the end of the serialize tuple container.

7. A computer-implemented method for manipulating a serialized data record contained in a serialized record container, where the serialized record container is according to any one of the preceding claims, comprising:
- receiving a request to update a serialized data record in the serialized record container, where the request includes a replacement data record;
- receiving the serialized record container, where the serialized record container includes at least one serialized data record;
- comparing size of the replacement data record to size of the serialized data record;
- overwriting serialized data record with the replacement data record in response to size of the replacement data record is less than or equal to the serialized data record; and
- manipulating the serialized record container in response to size of the replacement data record is greater than the serialized data record, wherein manipulating the serialized record container includes
- setting a validity indicator of the serialized data record, where the validity indicator of the serialized data record indicates whether data in the serialized data record is valid;
- appending the replacement data record to the serialized data record; and
- updating a record index for the serialized data record, where the record index is an array of offset values and each offset value in the array of offset values indicates a distance to beginning of a serialized data record in the serialized record container.

8. The method of claim 7, wherein comparing size of the replacement data record to size of the serialized data record includes determining size of the replacement data record from a size field in the replacement data record and determining size of the serialized data record from a size field in the serialized data record.

9. The method of claim 8, wherein determining size of the serialized data record further includes reading an encoding field in the serialized data record and determining size of the serialized data record in part based on the encoding field, where the encoding field indicates how data in size field is encoded in the serialized data record.

10. The method of any one of claims 7 to 9 further comprises
- receiving an insertion request to insert a given data record into the serialized record container, wherein the insertion request includes the given data record and an insert position for the given data record; and
- appending the given data record to the serialized record container at the insert position and updating the record index by inserting to the record index an offset value for the given data record at the insertion position of the given data record.

11. The method of any one of claims 7 to 10 further comprises
- receiving a deletion request to delete a given data record in the serialized record container, where the deletion request includes an offset for the given data record; and
- removing the offset for the given data record from the record index.

12. The method of any one of claims 7 to 11 further comprises
- appending the updated record index to an end of the serialized record container; and
- updating an index offset to reference location of the updated record index in the serialized record container, where the index offset indicates a distance to beginning of the updated record index in the serialized record container,
wherein the method preferably comprises:
- identifying one or more serialized data records in the serialized record container, where each of the one or more serialized data records contains invalid data; and
- overwriting data in the one or more serialized data records with uniform values.

13. The method of any one of claims 7 to 12 further comprises
- identifying one or more serialized data records in the serialized record container, where each of the one or more serialized data records contains invalid data; and
- creating a new serialized record container containing serialized data records having valid data.

14. The method of any one of claims 7 to 13 further comprises compressing the serialized record container prior to storing the serialized record container.

15. The method of any one of claims 7 to 14, wherein:
- the serialized record container includes a validity indicator indicating whether data in the serialized data container is valid, a type indicator field indicating the type of data stored in the serialized data container, and a size field indicating size of the serialized record container; and/or
- the at least one serialized data record includes a validity indicator indicating whether data in a particular serialized data record is valid, a type indicator field indicating the type of data stored in the particular serialized data record, a size field indicating size of the particular serialized data record, and payload area, wherein preferably the at least one serialized data record is defined as a key-value tuple and includes a key that uniquely identifies the at least one serialized data record in the serialized record container.
